# EUROPEAN PATENT SPECIFICATION

(11) **EP 3 459 283 B1**
(45) Date of publication and mention of the grant of the patent: **30.03.2022**
(21) Application number: 17814761.7
(22) Date of filing: 23.06.2017
(51) Int. Cl.: H04W 76/40, H04W 28/08, H04W 40/02, H04W 40/12, H04W 40/20

(54) **NODE, SYSTEM AND METHOD FOR DELIVERING UNICASTAND BROADCAST TRAFFIC IN A COMMUNICATION NETWORK**
KNOTEN, SYSTEM UND VERFAHREN ZUR BEREITSTELLUNG VON UNICAST- UND BROADCAST-VERKEHR IN EINEM KOMMUNIKATIONSNETZ
NOEUD, SYSTÈME ET PROCÉDÉ DE FOURNITURE DE TRAFIC DE DIFFUSION ET DE MONODIFFUSION DANS UN RÉSEAU DE COMMUNICATION

(30) Priority: 23.06.2016 US 201662354032 P; 13.07.2016 US 201662361812 P; 22.06.2017 US 201715630585
(43) Date of publication of application: 27.03.2019
(73) Proprietor: Huawei Technologies Co., Ltd., Longgang District Shenzhen, Guangdong 518129 (CN)
(72) Inventor: DAO, Ngoc Dung, Ottawa, Ontario K2T 0C7 (CA)
(74) Representative: Pfenning, Meinig & Partner mbB
(86) International application number: PCT/CN2017/089789
(87) International publication number: WO 2017/220023

(56) References cited:
- WO-A1-2015/150737
- WO-A1-2017/059913
- WO-A2-2008/072093
- CN-A- 101 242 581
- CN-A- 102 215 174
- CN-A- 105 472 548
- US-A1- 2014 372 624
- US-A1- 2015 040 162

## Description

### FIELD OF THE INVENTION

The present invention pertains to the field of communication networks and in particular to handling unicast traffic and broadcast traffic in a communication network, and in further detail may pertain to the delivery of unicast and broadcast traffic from content service providers through a mobile network.

### BACKGROUND

Third and fourth Generation (3G/4G) wireless networks, such as those conforming to standards established by the Third Generation Partnership Project (3GPP), provided network functions within their architecture to allow the networks to effectively deliver data flows to connected User Equipment (UE). Many of these network functions were introduced in 3G networks and then modified for deployment in 4G networks. Streaming traffic, such as streaming video content from Internet services, is growing as a proportion of data traffic handled by wireless communication networks.

Currently communication networks allow a content provider to select between two subsystems, a unicast subsystem and a multicast subsystem. The unicast subsystem makes use of at least one of a Packet Gateway and a Serving Gateway (P-GW/S-GW) to allow unicast traffic to be sent through the network to a single end device, allowing for one stream to be delivered to one end device. The multicast subsystem (sometimes referred to as a broadcast/multicast subsystem) makes use of a Broadcast/Multicast Service Centre (BM-SC) and a Multicast/Broadcast Multimedia Services Gateway (MBMS-GW). A content provider sends a single stream of traffic, intended for a plurality of devices, to the MBMS-GW, which makes use of a multicast capability for routing content data over a multicast transport, conveying broadcast traffic intended for all UEs in a cell or multicast traffic intended for a group of UEs in a cell, through the core network to the radio edge in an efficient manner. This allows an efficient use of resources as traffic destined for a plurality of radio nodes (Radio Access Network (RAN) nodes ("RNs")) can be transmitted using a multicast technique such as Internet Group Management Protocol (IGMP), where one stream is delivered to a plurality of devices. The single stream traverses the network until natural branch points, where it is replicated. This allows for a reduction in the bandwidth demands in comparison to transmitting a plurality of unicast streams through the network. The content provider selects one of the unicast and multicast systems and delivers data traffic to a node, such as a gateway node, in the selected subsystem. The delivered content is then transmitted towards the UE as either unicast data traffic using a unicast transport on the unicast subsystem, or as multicast data traffic or broadcast data traffic using a multicast transport on the broadcast/multicast subsystem (i.e. the MBMS subsystem), through the network to the RN serving the UE depending upon the selection.

The current architecture has inherent inefficiencies as the content provider selects between the two delivery subsystems and associated transports with limited information regarding conditions of the network or the mobility of the receiving UE. The inefficiencies may include, for instance, the creation of multiple unicast traffic streams to UEs accessing the same content which may be better served by a single broadcast/multicast traffic stream through the network. Similarly, a single broadcast traffic bearer may be used to distribute content to a low number of UEs in situations in which network resource may be more efficiently used by using unicast traffic streams to each of the UEs.

Accordingly, there is a need for a system, device and method for handling unicast and multicast data traffic that is not subject to one or more limitations of the prior art.

This background information is provided to reveal information believed by the applicant to be of possible relevance to the present invention. No admission is necessarily intended, nor should be construed, that any of the preceding information constitutes prior art against the present invention.

WO 2017/059913 A1 relates to a communication entity associated with a base station. The communication entity comprises an analyzer configured to analyze the content and/or type of a message received by the base station, a local message distributor configured to adopt a local message distribution policy for distributing the message to at least one user equipment of a plurality of user equipments on the basis of the content and/or type of the message.

WO 2008/072093 A2 discloses a method of switching between broadcast and unicast content on a mobile device, comprising: making unicast content available to a mobile device; making broadcast content available to the mobile device; and providing an application on the mobile device which allows for switching between the unicast and broadcast content.

US 2015/040162 A1 is about distributing multicast/broadcast content data via a multicast/broadcast and/ or unicast network, the latter in case the number of recipients is small.

### SUMMARY

It is an object of the present invention to obviate or mitigate at least one disadvantage of the prior art. The present invention is as defined in the appended independent claims. Further improvements are disclosed in the appended dependent claims, the description and the figures.

In some embodiments, a method is provided for delivering unicast content data over a communications network as specified in claim 1. In some implementations, the context information is received from one or more control plane functions. The network node may, in some cases, access the one or more control plane functions through an exposure function. For instance, in some embodiments, the exposure function may comprise a Network Exposure Function (NEF). The network node may, for instance, comprise one of: a packet streaming server; a node of a broadcast/multicast subsystem; a Broadcast/Multicast Service Centre server; and, a third party content provider server outside the communications network. In some implementation, the network node may comprise a third party content provider server outside the communications network, and the method may further comprise the network node: receiving the context information from one or more control plane functions accessed through an exposure function.

In the inveniton a network node operative to deliver unicast content data over a communications network is provided as specified in claim 7. In some implementations, the network node receives the context information from one or more control plane functions. In some implementations, the network node is operative to access the one or more control plane function through an exposure function. In some implementations, the network node comprises one of: a packet streaming server; a node of a broadcast/multicast subsystem; a Broadcast/Multicast Service Centre server; and, a third party content provider server. In some implementation, the network node comprises a third party content provider server outside the communications network, and wherein the context information is obtained by the network node through an exposure function that provides access to one or more control plane functions operative to provide the context information.

In some embodiments, a method is provided for delivering unicast content data comprising, at a radio access network node (RN): receiving the unicast content data; transmitting to a recipient UE an instruction based on context information to establish a broadcast radio bearer or a multicast radio bearer to receive the unicast content data; and, transmitting to the recipient UE the received unicast content data using the established radio bearer. In some implementations, the context information comprises at least one of: mobility information associated with the UE; session information associated with the unicast content data and/or the UE; an indication of a requirement to deliver the unicast content data to a plurality of UEs; radio node context related to at least one operational condition at the RN; and, network loading conditions. In some implementations, the at least one operational condition comprises at least one of: a number of UE served by the RN; a radio channel quality between the RN and the UE; a radio bearer availability; and, a type of the content data. In some implementations, the method further comprises receiving a radio bearer indication indicating the established radio bearer from a network entity. In some implementations, the network entity comprises a Multi-cell Coordination Entity (MCE) in communication with a plurality of radio access network nodes. In some implementations, the method further comprises: transmitting to the recipient UE a protocol stack indication indicating a protocol stack to be associated with the established bearer.

In some embodiments, a radio access network node (RN) is provided. The RN connected to a communication network and operative to deliver unicast content data to one or more served User Equipment (UE), the RN comprising: a network interface for receiving data from and transmitting data to nodes connected to the network; a radio interface for receiving data from, and transmitting data to, the one or more served UE; a processor; a memory storing instructions that when executed by the processor configure the RN to: receive the unicast content data; transmit to at least one recipient UE an instruction based on context information to establish a broadcast radio bearer or a multicast radio bearer to receive the unicast content data; and, transmit to the at least one recipient UE the received unicast content data using the established radio bearer. In some implementations, the context information comprises at least one of: mobility information associated with the UE; session information associated with the unicast content data and/or the UE; an indication of a requirement to deliver the content to a plurality of UEs; radio node context related to at least one operational condition at the RN; and, network loading conditions. In some implementations, the at least one operational condition comprises at least one of: a number of UE served by the RN; a radio channel quality between the RN and the UE; and, a radio bearer availability. In some implementations, the RN is further operative to: receive a radio bearer indication indicating the established radio bearer from a network entity. In some implementations, the network entity comprises a Multi-cell Coordination Entity (MCE) in communication with a plurality of radio access network nodes.

Embodiments have been described above in conjunctions with aspects of the present invention upon which they can be implemented. Those skilled in the art will appreciate that embodiments may be implemented in conjunction with the aspect with which they are described, but may also be implemented with other embodiments of that aspect. When embodiments are mutually exclusive, or are otherwise incompatible with each other, it will be apparent to those skilled in the art. Some embodiments may be described in relation to one aspect, but may also be applicable to other aspects, as will be apparent to those of skill in the art.

The invention further provides system as specified in claim 9.

### BRIEF DESCRIPTION OF THE FIGURES

Further features and advantages of the present invention will become apparent from the following detailed description, taken in combination with the appended drawings, in which:
Figure 1A illustrates a network diagram of a wireless communication network.
Figure 1B illustrates a prior art transport sub-system for unicast and broadcast/multicast traffic.
Figure 2 illustrates a protocol stack for 3GP DASH unicast service delivery.
Figure 3 illustrates a protocol stack view of the MBMS User Services.
Figure 4A illustrates an embodiment of an MBMS subsystem architecture as the default transport system for broadcast content providers and some unicast content providers.
Figure 4B illustrates an embodiment of an MBMS subsystem architecture as the default transport system for broadcast content providers and some unicast content providers.
Figure 4C illustrates a signalling diagram of steps performed by an MBMS subsystem architecture as example useful for understanding the invention.
Figure 5A illustrates an embodiment in which an MB-SC Server has the capability to select either multicast or unicast depending on network conditions and UE context.
Figure 5B illustrates an example useful for understanding the invention in which a broadcast/multicast subsystem has the capability to select either multicast or unicast depending on network conditions and UE context.
Figure 5C is a signalling diagram illustrating operations of an embodiment.
Figure 6A illustrates an example useful for understanding the invention in which a third party content provider may select between unicast or multicast based upon feed back provided by a Service Capability Exposure Function (SCEF).
Figure 6B illustrates an embodiment in which a third party content provider may select between unicast or multicast based upon feed back provided by a Network Exposure Function (NEF).
Figure 7A illustrates an embodiment which includes a Packet Switched Streaming Server (PSS) providing input to a BM-SC.
Figure 7B illustrates an embodiment which includes a PSS providing input to a broadcast/multicast subsystem.
Figure 8A illustrates an embodiment in which a PSS may select between unicast or multicast based upon feed back provided by a SCEF.
Figure 8B illustrates an embodiment in which a PSS may select between unicast or multicast based upon feed back provided by a EF.
Figures 9A and 9B illustrate examples useful for understanding the invention of a system architecture for handling broadcast/multicast traffic.
Figure 10A is a block diagram of an example useful for understanding the invention of a user equipment.
Figure 10B is a signalling diagram illustrating examples useful for understanding the invention of operation of a user equipment.
Figure 11 a block diagram of an example useful for understanding the invention of a computing system

It will be noted that throughout the appended drawings, like features are identified by like reference numerals.

### DETAILED DESCRIPTION OF THE INVENTION

### Definitions

- BC:: Broadcast
- BM-SC:: Broadcast/Multicast Service Centre
- CN:: Core Network
- EF:: Exposure Function
- EPS:: Evolved Packet switched System bearer
- MBMS-GW:: Multicast/Broadcast Multimedia Services Gateway
- MCE:: Multi-cell Coordination Entity
- MM:: Mobility Management
- MNO:: Mobile Network Operator
- P-GW:: Packet Gateway
- PSS:: Packet Switched Streaming Service Server
- S-GW:: Serving Gateway
- RAN:: Radio Access Network
- RN:: RN
- SCEF:: Service Capability Exposure Function
- SM:: Session Management
- UC:: Unicast
- UE:: User Equipment

Prior art wireless communication networks provide for separate treatment between unicast content and broadcast or multicast content. Unicast content can be transmitted to a single UE using a unicast transport through a unicast logical channel of both the core network and radio access network of the wireless communication network. Broadcast or multicast content (which may be referred to as Broadcast/Multicast content) is transmitted to a plurality of UE using a multicast transport over a multicast logical channel in the core network, and can then be multicast using a multicast radio bearer to a group of UEs or broadcast using a broadcast radio bearer to all UEs served by a Radio Access Network (RAN) node, or "RN". In particular, the prior art communication networks include separate data handling subsystems for different types of data traffic. When using prior art networks, content providers are required to select a data traffic type, unicast, broadcast, or multicast at the start of the transmission. The selection of the traffic type can be based on whether the intended recipient is a single UE, a plurality of UEs, or a defined group of UEs. For video content, for instance, in current 3GPP systems, there is support for broadcast TV channels to be delivered as broadcast or multicast data traffic using a multicast transport to a plurality of UEs at the same time over a broadcast/multicast subsystem depending on the popularity of the TV channels. In this example, the 3GPP broadcast/multicast subsystem is commonly referred to as the MBMS sub-system, or the eMBMS sub-system in LTE networks. Content providers can choose to transmit video content as unicast data traffic to specific UEs when there is a low number of UEs receiving the same traffic. Each of the unicast streams is delivered using a unicast transport through a unicast subsystem, such as the P-GW/S-GW subsystem of 4G communication networks, which transmits each of the unicast streams separately through both the core network and the radio access network. In this case the selection is made by the content providers based on their perceived overall demand for the content, without regard to the number of UE connected to a particular single node in the radio access network.

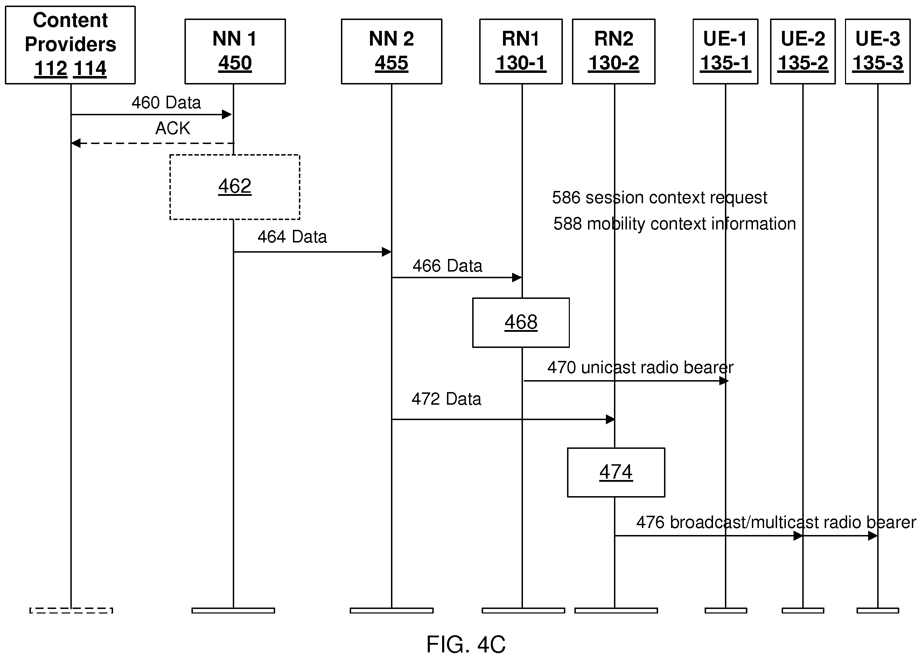

Fig. 4C, 5B, 6A, 9A, 9B, 10A, 10B and 11 and their descriptions do not or do not fully correspond to the invention as defined in the claims. They are therefore not according to the invention as defined in the claims and are present for illustration purposes only or to highlight specific aspects or features of the claims.

The description below presents embodiments in the context of currently existing LTE communication systems for illustrative purposes. The use of LTE specific terms is purely for reference to identify the type of network entity that would perform particular operations. For instance, a Node B, eNB, and gNB are all RNs that may perform the RN operations described within the present application. Similarly, network entities such as packet gateways (P-GW), packet streaming server (PSS) providing multimedia streaming services for 3GPP mobile network operators, or the Broadcast/Multicast Service Centre (BM-SC) for example, are representative of network node locations in current Evolved Packet Core (EPC) networks that may conveniently be used to perform the systems and methods described herein.

A person skilled in the art could apply the invention concepts to nodes and functions within a next generation communication network such as the so-called 5G system, for instance one whose core network architecture is specified in 3GPP Technical Specifications TS 23.501 and TS 23.502. In particular, network entities in LTE and the EPC that are identified in the present application may be replaced by network nodes and functions that are provided with different names, but are largely responsible for performing the same or similar network operations. The teachings of the present application are equally applicable for next communication networks. For example, in relation to the current terms used for the proposed 5G networks, the SCEF, MM, SM discussed below could be replaced by a NEF (Network Exposure Function), AMF (Access and Mobility management Function) and SMF (Session Management Function), respectively, as currently defined in 3GPP TS 23.501.

More generally, in an embodiment a network node in logical proximity to the gateway through which the content to be distributed is received may be operative to receive content data in the form of data traffic and to select between a unicast subsystem and a broadcast/multicast subsystem to carry the data traffic ("received content data") through the core network. The network node may be operative to make the selection based on context information. In some embodiments, the context information may include context information such as UE context information, RN context information, and/or network context information. For instance, context information such as mobility information associated with the UE; session information associated with the content data and/or the UE; an indication of a requirement to deliver the content to a plurality of UEs; at least one operational condition at a RN(s) (RN(s)) serving the UE or UEs; and, network loading conditions. In some embodiments, the operational condition at the RN may include at least one of: a number of UE served by the RN; a radio channel quality between the RN and the UE; a radio bearer availability; and, a type of the content data. The RN(s) can then transmit the received content data to the UE(s).

In an embodiment, a network node in logical proximity to the output of data content from the communication network may be operative to receive broadcast data traffic or multicast data traffic transported using a multicast transport by a broadcast/multicast subsystem and to select between a unicast data channel, a broadcast data channel, and a multicast data channel to carry the data traffic to one or more RN for wireless transmission to one or more recipient UE.

A RN is operative to receive content data traffic and to select between a unicast radio bearer, a broadcast radio bearer, and a multicast radio bearer to transmit the received content data traffic to one or more recipient UE served by the RN. In some implementations, the RN receives the content data traffic in a BM-SC defined bearer. The bearer may be either unicast or multicast, and it may contain data that is of a unicast data traffic type, a broadcast data traffic type, or a multicast data traffic type. In some implementations, the RN makes the radio bearer selection based on operational conditions at that RN.

A network node may be operative to instruct each of one or more RN to select between a unicast radio bearer, a broadcast radio bearer, and a multicast radio bearerto transmit received content data traffic to one or more recipient UEs served by that RN. In some implementations, the network node may be operative to base the instruction on operational conditions at one or more RNs. In some implementations, the network node may be operative to base the instruction on context information related to the one or more recipient UE. In some implementations, the context information may comprise at least one of UE mobility context information and UE session context information of the UE served by the RN.

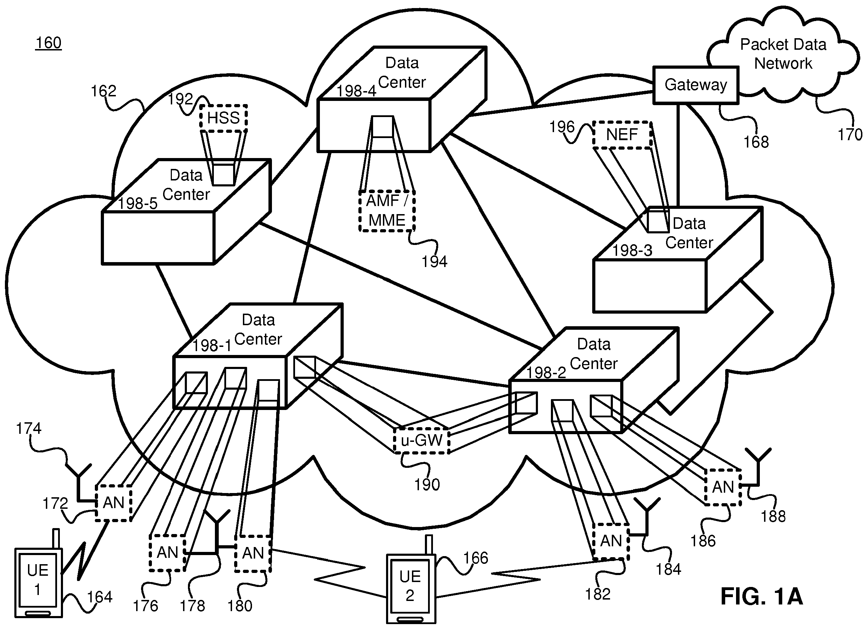

Figure 1A illustrates a system 160 in which a core/RAN network 162 provides radio access and core network services to electronic devices such as UE1 164 and UE2 166. The system 160 is illustrative of proposed 5G communication networks that may be adapted to provide the systems and methods described within the present application. In Figure 1A, network functions are instantiated upon the underlying resources of a data center. The functions are shown as being exploded out of the pool of resources upon which they are instantiated. This is done to indicate that the functions act as independent entities and from a logical perspective they are indistinguishable from a physical node carrying out the same function. It should also be understood that in a sliced network where data centers provide the underlying resources upon which the slices are created, it is possible for a single network to have slices that support different versions of networks, so for example, in addition to having a virtualized network to support 5G traffic, a separate network slice can be created to support 4G networks. Traffic from electronic devices can be routed through network functions, to a gateway 168 that provides access to a packet data network 170 such as the Internet. Radio access services are typically provided by a RAN, which in this illustration is provided as a Cloud-RAN (C-RAN). Where a conventional RAN architecture was designed to be composed of discrete elements, such as eNodeBs, that were connected to the Core Network through a backhaul network, a C-RAN takes advantage of function virtualization to virtualize the Access Nodes of the network. Much as a physical Access Node, such as an eNodeB, was connected to an antenna by a front haul link, in the illustrated embodiment of a C-RAN Access Nodes, such as a gNodeB, are connected to antenna (or to a remote radio head (RRH)) through a front haul connection, but are functions that are instantiated upon compute resources in network 162. If a gNodeB is divided into a Central Unit and a plurality of Distributed Units, the virtualized Distributed Units may in some embodiments be instantiated at or near the location of the antenna or RRH, while a Centralized Unit may be instantiated at a data center to connect and serve a plurality of geographically dispersed Distributed Units. For example, UE1 164 is connected to the network through RN 172, which can provide radio access services through antenna 174. RN 172 is instantiated upon the compute and storage resources provided by a data center, in this case data center 198-1. Similarly, RN 176 and RN 180, which are connected to the same set of antennae 178, are also instantiated upon the resources of data center 198-1. RN 180 provides radio access services to UE 2 166, which also makes use of the access services provided by RN 182. RN 182 is connected to antenna 184, and is instantiated upon the resources of data center 198-2. RN 186 is connected to antenna 188, and is also instantiated upon the resources of data center 198-2. It should be understood that the fronthaul connections linking the virtualized access nodes to the antennas or RRHs, may be direct connections, or they may form a fronthaul network. The integration of a CRAN into a core network may obviate or reduce the concerns associated with backhaul connections as the RN functions may be co-located with CN functions. As such, Data Center 198-1 also serves as a location at which a user-specific gateway function (u-GW) 190 is instantiated. This function is also instantiated in data center 198-2. Having a function instantiated at more than one data center may be part of a function migration process in which the function is moved through the network, or one of the instantiations may be an intentionally redundant instantiation. Both functions can be instantiated and configured, with only one of them active at a time, or they may both be active, but only one of them may be transmitting data to the UE. In other embodiments, such as those focussed on Ultra-Reliable connections, such as Ultra-Reliable Low Latency Communications (URLLC), both functions may be active and transmitting data to (or receiving data from) an ED such as UE2 166. Network functions such as a Home Subscriber Server (HSS) 192, an Access and Mobility Management Function (AMF) 194 or its predecessor Mobility Management Entity (MME), and a Network Exposure Function (EF) 196 are shown as being instantiated on the resources of Data Center 198-5, 198-4 and 198-3 respectively.

The virtualization of the network functions allows a function to be located in the network at a location topologically close to the demand for the service provided by the function. Thus, AN 172, which is associated with antenna 174, can be instantiated upon data center resources at the data center closest to the antenna 174, in this case data center 198-1. Functions such as an NEF 196, which may not need to be close to RNs, may be instantiated further away (in either or both of a topological or physical sense). Thus, NEF 196 is instantiated at data center 198-3, and the HSS 192 and AMF 194 are instantiated at data centers 198-5 and 198-4 respectively, which are topologically closer to the radio edge of the network 162. In some network implementations, data centers can be arranged hierarchically and different functions can be placed at different levels in the hierarchy.

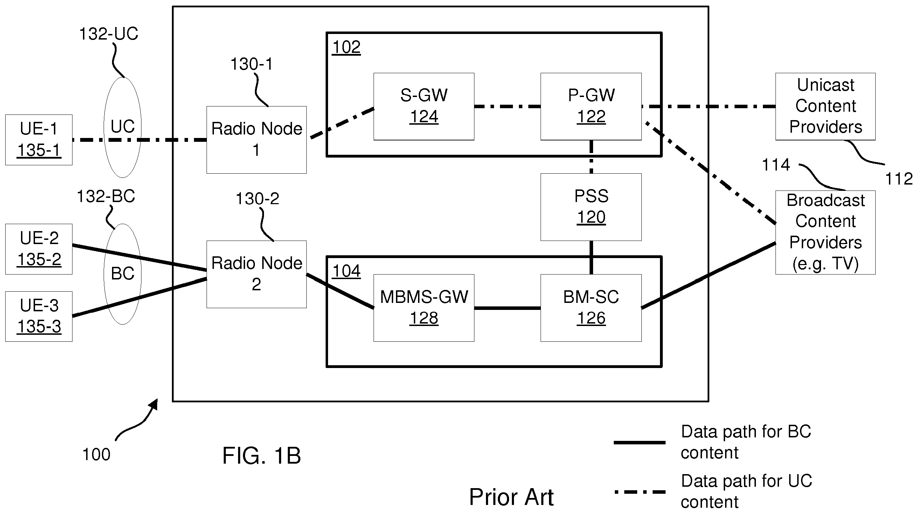

Referring to Figure 1B, as an example, a current prior art 3GPP eMBMS transport sub-system 100 for transporting unicast data traffic using a unicast transport on a unicast subsystem 102 and for transporting broadcast data traffic and multicast data traffic using a multicast transport on a broadcast/multicast subsystem 104 are presented. Broadcast data traffic or multicast data traffic intended for multiple UEs, including simulcast video content for instance, is conventionally handled by the separate broadcast/multicast subsystem 104. Unicast data traffic is intended for a single UE, and is handled like other direct requests and responses to specific data content such as web pages, email, etc. Unicast data traffic is transmitted using a unicast transport including a unicast protocol stack such as a TCP-based protocol stack over a unicast subsystem 102.

Currently, the MBMS subsystem in a communication networks requires a content provider, such as unicast content providers 112 or broadcast content providers 114, to select between the unicast subsystem 102 and the broadcast/multicast subsystem 104 based on a content provider based perspective such as the overall demand perceived by the content providers 112 114, or their own determining based on data traffic type (i.e. unicast content intended for a single UE vs. broadcast/multicast content available for one or more UE). With a sufficient number of geographically diverse UEs receiving a single stream, the use of a multicast delivery system has efficiency advantages for the network. However, there is overhead associated with the creation and management of multicast sessions using multicast transport, as such, for a single UE or for a small number of UEs, it may be more efficient from the perspective of the network to transmit the content in a series of unicast streams using unicast transport. Due to the design of the (e)MBMS system, however, the transport selection decision is currently made by the content source without regard to operational conditions in the network or RNs.

In this example of a 3GPP communication network, a Packet Gateway (P-GW) 122 and Serving Gateway (S-GW) 124 support the receipt and delivery of unicast data traffic using a unicast transport (UC) through a RN to one UE. In this example, the RN is RN 1 130-1 that establishes a unicast radio bearer 132-UC to deliver the unicast data content to the intended recipient UE 135-1. The broadcast/multicast subsystem 104 of this 3GPP example includes a Broadcast/Multicast Service Centre (BM-SC) 126 and a Multicast/Broadcast Multimedia Services Gateway (MBMS-GW) 128 to support the receipt and delivery of broadcast data traffic and multicast data traffic using a multicast transport (BC) through one or more RN to one or more UE. Typically, though not necessarily, the broadcast data traffic and multicast data traffic is transmitted to a plurality of UEs. In this example, the RN is Radio Node 2 130-2 that establishes a broadcast radio bearer or a multicast radio bearer 132-BC to deliver the broadcast data traffic or multicast data traffic to the intended recipient UEs 135-2 135-3.

In this prior art arrangement, the content providers 112 114 choose whether to deliver data traffic to a recipient unicast node in the unicast subsystem 102 or a recipient broadcast/multicast node in the broadcast/multicast subsystem 104 based on their own determination of an intended audience or data traffic type. For instance, "broadcast content", such as a television show, may be directed to the broadcast/multicast subsystem 104 by the broadcast content provider 114 without regard to the demand for such content, or the number of UEs 135-1 135-2 135-3 requesting such content either overall or within a particular RN cell.

Content data can be transmitted towards the UE 135-1 135-2 135-3 on either a unicast logical channel or a broadcast/multicast logical channel depending upon the selection by the content provider 112 114 without regard to network conditions, or other needs of the network operator. The broadcast content providers 112 114 can choose between unicast or broadcast/multicast paths based upon a number of factors including a perceived popularity of the content, or a perceived content type (such as a TV broadcast). The broadcast/multicast service uses a multicast transport including an application layer Forward Error Correction (FEC) and a UDP/IP protocol stack, which are efficient for distributing content to multiple users over a point-to-multipoint multicast/broadcast channel. For unicast traffic, the TCP/IP protocol stack is currently used as the unicast transport for handling multimedia streaming, such as DASH (Dynamic Adaptive Streaming over HTTP) video streaming service. The unicast logical channel is generally more efficient for handling content delivery to a low number of UE, whereas a broadcast channel or multicast logical channel is generally more efficient for handling content delivery to a larger number of UE, or where more advanced error correction would be useful.

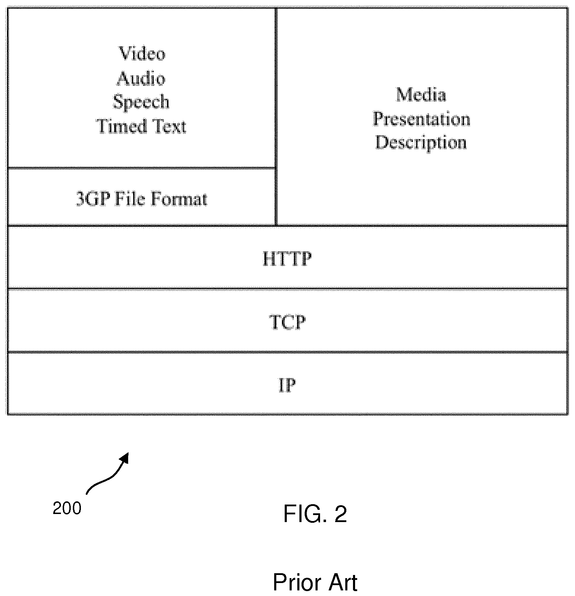

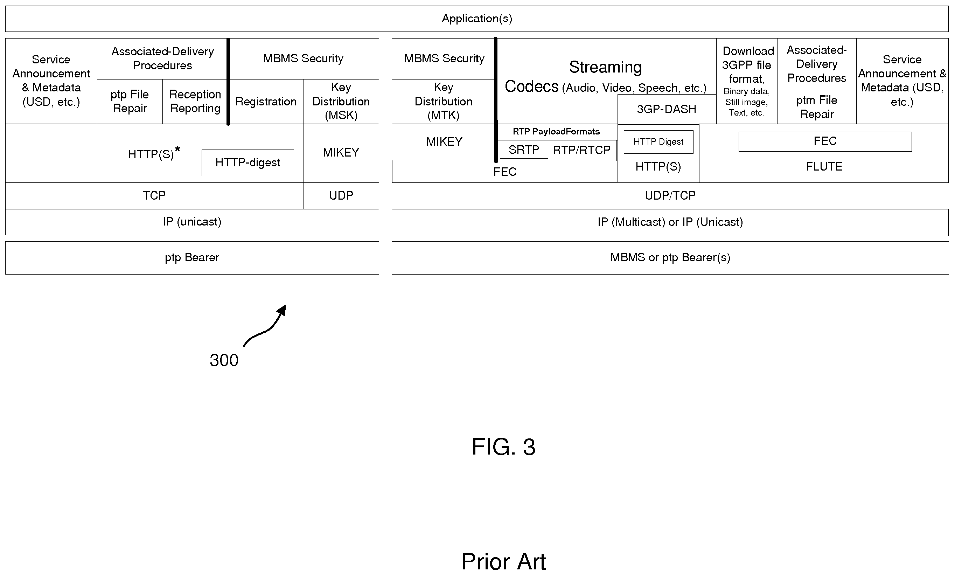

Figures 2 and 3 illustrate examples of protocol stacks for unicast logical channels handling unicast data traffic and broadcast channels or multicast logical channels handling broadcast or multicast data traffic as are currently implemented for 3GPP unicast and broadcast/multicast traffic handling.

Figure 2 illustrates an example of a prior art unicast protocol stack 200 for DASH unicast service delivery. For unicast traffic from unicast content providers, the TCP/IP protocol stack is used to handle multimedia streaming, such as over-the-top (OTT) video service providers using DASH protocols and video streaming services of mobile network operators using the 3GP-DASH protocol.

Figure 3 illustrates an example of a broadcast/multicast protocol stack 300 for MBMS User Services. In the figure illustrating 3GPP broadcast services, broadcast and multicast traffic is supported by an application layer FEC and UDP/IP protocol stack, which are efficient to distribute content to multiple users over the point-to-multipoint broadcast channel or multicast logical channel through the RAN.

The differing treatment of the two traffic types using separate sub-systems according to prior art methods has a number of disadvantages.

There is a potential for unduly consuming the resources of the core network (CN) and the RAN. In some cases, the unicast delivery path is employed for serving a plurality of UEs 135-1. When there are multiple UEs 135-1 accessing the same unicast content (e.g. a TV channel), but the number of those UE 135-1 is still insufficient to set up an eMBMS radio bearer, the CN and RAN resources are more heavily consumed than they would be in a broadcast delivery scenario. This increased usage of CN and RAN resources is due to the delivery of duplicate packets over multiple unicast sessions. For large networks with hundreds or thousands of cells, the number of unicast sessions could be hundreds or thousands accordingly.

Streaming flows using the TCP/IP protocol often experience performance degradation in wireless and mobile environments. The TCP/IP flow control often gives a conservative sending rate in a wireless environment. This is due to the large variation in packet delay that arises when the wireless channel capacity varies due to factors such as user mobility, fast fading, handover, and sharing wireless air interface with other mobile users. This can have negative impacts on video streaming performance.

In the case of LTE, for example, due to a limited number of eMBMS bearers that can be supported in a single area, and the overhead associated with the creation of these bearers, network operators have set minimum thresholds for the number of UEs receiving a stream before the broadcast/multicast subsystem is selected. If there are fewer UEs than the minimum threshold, the operator may not establish an eMBMS radio bearer, and instead may duplicate streaming packets using the Core Network (CN) and Radio Access Network (RAN) resources in an inefficient manner.

Possible service interruption also can cause issues. When switching between unicast and broadcast/multicast delivery mode, new bearers need to be set up on the selected unicast subsystem or broadcast/multicast subsystem (e.g. for 4G LTE either P-GW/S-GW sub-system or BM-SC/MBMS-GW). This switching process requires signalling overhead and during the switchover, there is the potential for service disruption.

The content providers are empowered to determine an appropriate transport mode based on an intended content delivery channel, although the MNO is often better positioned to efficiently determine the best transportation method for the content given current network conditions and specific UE demand and location. The conventional processes lack a mechanism for either the MNO to determine which transportation method should be used, or to provide sufficient information for the content provider to make an educated determination of the appropriate transport mode taking network conditions into account.

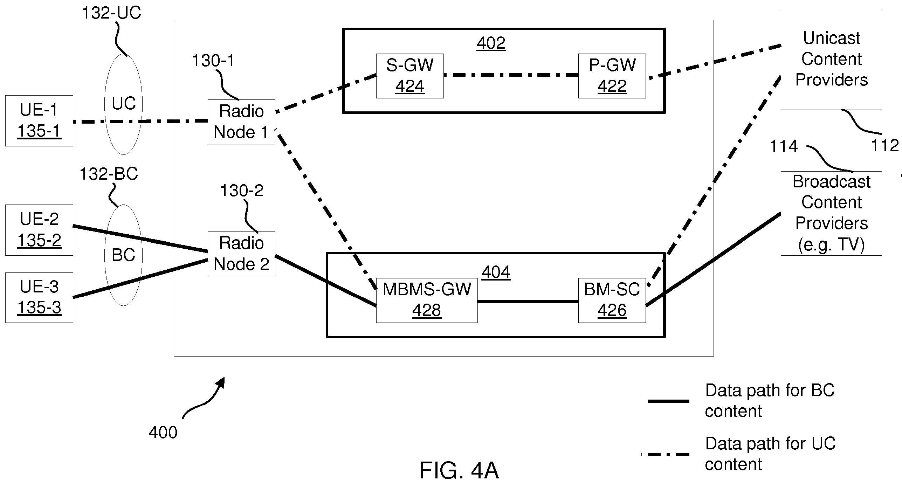

Referring to Figure 4A, an embodiment of a transport subsystem 400 in the context of elements of a 4G communication network is presented. As will be appreciated, the embodiments described below are applicable to other networks than the currently implemented 4G LTE networks, and the systems and methods are intended to be used for all applicable networks. The embodiments described herein are illustrated in the context of existing 3GPP network entities for explanatory purposes, but are not intended to be so limited. The embodiments are intended for future planned networks, such as 5G networks currently under development which may call similar functioning network entities by different names. Furthermore, future network entities may combine the functionality currently provided by multiple entities, or may divide functionality across additional entities depending upon network requirements. The embodiments described herein are intended to be used with all such network entities that provide similar unicast or broadcast/multicast traffic handling through the network.

Components of the systems described below, such as and gateways may more generically be referred to as network nodes which may be configured to provide the indicated functionality.

Figure 4A illustrates the data paths taken by unicast content intended for a single recipient UE and broadcast content or multicast content intended for one or more recipient UE. In an embodiment, the unicast content is being transmitted using a unicast transport including a unicast protocol stack and the broadcast content and multicast content is being transmitted using a multicast transport including a broadcast/multicast protocol stack.

In the embodiment of Figure 4A, the unicast subsystem 402, including the P-GW 22 and S-GW 424 if utilized, may be substantially the same as the unicast subsystem 102 of Figure 1. In the embodiment of Figure 4A, the broadcast/multicast subsystem 404 can be used as the default transport system for broadcast data traffic and multicast data traffic and some unicast data traffic as explained further below. In the embodiment illustrated, unicast content providers 112 may choose to transport unicast data traffic using a unicast transport over the unicast subsystem 402. In this example, the unicast subsystem 402 is illustrated as a 3GPP unicast subsystem 402 including a P-GW 422 and S-GW 424, however the transport subsystem 400 need not be limited to using 3GPP 4G or LTE components. In some implementations, all streaming traffic is routed initially to the broadcast/multicast subsystem 404. The broadcast/multicast subsystem 404 may then be operative to transport the streaming traffic on a broadcast channel or a multicast logical channel using a multicast transport including a broadcast/multicast protocol stack and to perform selective re-routing of unicast traffic flows as necessary through the unicast subsystem 402 on a unicast logical channel using a unicast protocol stack.

As illustrated in Figure 4A, the unicast content providers 112 (such as video streaming and large file distribution service providers) and broadcast content providers 114 (delivery of TV content for example), send data streams (both unicast content data as unicast data traffic and broadcast content data as broadcast data traffic and multicast content data as multicast data traffic) to the broadcast/multicast subsystem 404. In this example, the broadcast/multicast subsystem 404 includes a BM-SC server 426 operative to receive unicast data traffic, broadcast data traffic, and multicast data traffic, and to convert the unicast content data from unicast data traffic using a unicast transport and a unicast protocol stack to a multicast transport using a broadcast/multicast protocol stack for transport through the broadcast/multicast subsystem 404. In some embodiments, the content providers 112 114 may deliver all content to the broadcast/multicast subsystem 404 as broadcast/multicast data traffic using a multicast transport including a broadcast/multicast protocol stack. In such embodiments, it may not be necessary for the broadcast/multicast subsystem 404 to include the functionality to convert from unicast data traffic using a unicast transport into broadcast/multicast data traffic using a multicast transport.

In some embodiments, where the content is pre-recorded, the data stream can be delivered to the BM-SC server 426 in advance as a data file. The BM-SC server 426 receives the data stream and generates coded packets, using for example a fountain code to produce a broadcast/multicast data stream. The coded packets are sent to the MBMS-GW 428. The MBMS-GW 428 distributes the coded packets as broadcast data traffic or multicast data traffic to RNs 130-1 130-2 that serve users requesting the content. Depending on the number of users served by a selected RN 130-1 130-2, the RN 130-1 130-2 may setup either a broadcast radio bearer or a multicast radio bearer 132-BC, such as an eMBMS (enhanced MBMS) radio bearer, to broadcast coded packets to multiple UEs 135-2 135-3. If the number of users served by that RN 130-1 130-2 is small (for example 1 or 2 users), then the RN 130-1 130-2 can set up a unicast radio bearer 132-UC, such as a GBR bearer, to send coded packets to the served UE 135-1. Accordingly, the solution provides for the RN 130-1 130-2 to select an appropriate delivery format depending upon context information. In an embodiment, the context information may include at least one of: mobility information associated with the UE 135-1 135-2 135-3; session information associated with the content data and/or the UE135-1 135-2 135-3; an indication of a requirement to deliver the content to a plurality of UEs 135-1 135-2 135-3; at least one operational condition at the RN; and, network loading conditions. In an embodiment, the at least one operational condition at the RN 130-1 130-2 may include, for instance, the number of served UE 135-1 135-2 135-3, a radio channel quality between the RN 130-1 130-2 and the UE 135-1 135-2 135-3, a radio bearer availability, and, a type of the content data.

In this implementation, the RAN can keep the current bearer (e.g. unicast, broadcast, or multicast) to transport the content data through the network, but a new radio bearer may be established at each RN 130-1 130-2 to serve the individual UEs 135-1 135-2 135-3 accessing that RN 130-1 130-2. For example, a RN can switch from BC bearer 132-BC to UC bearer 132-UC when there are an insufficient number of served UEs 135-1 135-2 135-3 accessing the particular content stream. Accordingly, the RN can switch between a UC bearer 132-UC and a BC bearer 132-BC as necessary to optimize the traffic delivery. Selection of the radio bearer type may occur at the RNs (which can in some embodiments be signalled in the core network). Alternatively, another network entity, such as a network node operative to receive UE context information and data traffic information, and to transmit a radio bearer indication of radio bearer allocation information to RNs, can coordinate the selection of radio bearer in some or all of the RNs 130-1 130-2. In some embodiments, the network entity may be further operative to provide a protocol stack indication indicating the protocol stack associated with the content data.

An example of such a suitable network entity may include for instance, a Multi-cell/Multicast Coordination Entity (MCE) as described in 3GPP LTE RAN. In some embodiments, the rest of the protocol within the RAN may remain unchanged from the current methods. Thus, the determination of whether a RN 130-1 130-2 makes use of a unicast radio bearer 132-UC or a broadcast radio bearer / multicast radio bearer 132-BC is made in accordance with context information which may include, for instance RN-specific operational information. The RN-specific operational information may include, for instance, the number of unicast and broadcast streams being served by the RN130-1 130-2, radio channel quality between the RN and the recipient UE, a radio bearer availability at the RN, a type of the content data, and/or the number of UEs 135-1 135-2 135-3 receiving each content stream.

In some embodiments, the RN 130-1 130-2 may be further operative to transmit to the UE 135-1 135-2 135-3 an instruction to inform the UE 13501 13502 13503 to establish a radio bearer corresponding to the selected radio bearer. In some embodiments, the RN 130-1 130-2 may be further operative to transmit to the UE 135-1 135-2 135-3 an instruction indicating a protocol stack to be associated with the established radio bearer. As indicated above, the established radio bearer and the protocol stack may be selected based on context information either by the RN 130-1 130-2 or by another network entity such as the MCE.

In an embodiment, separate broadcast links can be established between the broadcast/multicast subsystem 404, e.g. from the MBMS-GW 428 as illustrated in in the embodiment of Figure 4A, and each RN 130-1 130-2 serving a UE 135-1 135-2 135-3. In some implementations, the use of forward error control (FEC) coding allows for the transmission of differently packaged data over different links - for example, to set different quality levels for different UE links to avoid overflow at the RN 130-1 130-2. The application layer FEC encoding allows for different data coding in different links, even if from the same source link (e.g. the data coding may provide for different quality levels in different links, based upon downstream conditions or operational requirements).

In an embodiment, the data distribution from the broadcast/multicast subsystem 404, e.g. from the MBMS-GW 428 as illustrated in the embodiment of Figure 4A, can be implemented in two ways while still employing a broadcast/multicast format using a multicast transport on a broadcast/multicast protocol stack.
- Mode 1: multicast session. The broadcast/multicast subsystem 404 (e.g. MBMS-GW 428) sends broadcast or multicast packets to multiple RNs130-1 130-2 at the same data rate and optionally sends the same coded packets to each of the RNs130-1 130-2. The RNs 130-1 130-2 have a data buffer to store received coded packets and forward to the served UE 135-1 135-2 135-3.
- Mode 2: multiple unicast sessions are established between the broadcast/multicast subsystem 404, e.g. from the MBMS-GW428 as illustrated in the embodiment of Figure 4A, and different RNs 130-1 130-2. Each of these unicast sessions can have different data rates and the broadcast/multicast subsystem 404 (e.g. MBMS-GW 428) may transmit different coded packets to different RNs 130-1 130-2 depending on the available link throughput (optionally the data rate may be adjusted for each link as required).

In either mode, some packets may be lost if a data buffer at one of the RNs 130-1 130-2 overflows, or if there are transmission errors in the air interface. There are two ways to correct the errors as part of the broadcast/multicast protocol stack (e.g. MBMS protocol stack) (see Figure 3).

Method 1: Because data packets are coded, repair packets can be created and sent together with the original uncoded data packets. The UE 135-1 135-2 135-3 can continue to receive packets until enough packets have been received to enable the UE 135-1 135-2 135-3 to decode the original file. Once a UE 135-1 135-2 135-3 has received enough coded packets to decode the original file, and if data is being sent over a unicast radio bearer 132-UC, the UE 135-1 135-2 135-3 may be operative to transmit an acknowledgement message back to the serving RN 130-1 130-2 confirming that the data file is fully received. Upon receiving this confirmation message, the serving RN 130-1 130-2 can stop sending the remaining packets (repair packets and original uncoded data packets) of the data file to save air interface resources.

Method 2: If the UE 135-1 135-2 135-3 cannot receive enough packets to decode the original data file after the receiving end-of-session message, the UE 135-1 135-2 135-3 can establish a unicast session using a unicast transport (TCP session for example) with a network node, such as the BM-SC server 426 ,so that the network node (i.e. BM-SC server 426) can send additional coded packets for the UE 135-1 135-2 135-3 to decode the original file.

The present implementation allows for flexibility at the RN level. For instance, if the number of UEs 135-1 135-2 135-3 consuming a video stream, e.g. a video stream corresponding to the programming of a TV channel, changes, a serving RN 130-1 130-2 can switch between a unicast radio bearer 130-UC (e.g. unicast GBR bearer) and a broadcast or multicast radio bearer 130-BC (e.g. eMBMS bearer) based on the updated context information to best make use of available resources (e.g. available spectrum) to deliver the content data. Before changing the radio bearer type, the serving RN 130-1 130-2 can transit an instruction to inform the UE 135-1 135-2 135-3 of the impending radio bearer change so that the UE 135-1 135-2 135-3 can setup the new radio bearer as instructed. The UE 135-1 135-2 135-3 can confirm the new radio bearer with the RN 130-1 130-2; and the RN 130-1 130-2 can send data over the new radio bearer and release the old radio bearer. The switching between the unicast radio bearer 132-UC and the broadcast or multicast radio bearer 132-BC can be independent of bearer settings between the serving RN 130-1 130-2 and the broadcast/multicast subsystem 404 (i.e. between the serving RN 130-1 130-2 and the MBMS-GW 428 and between the MBMS-GW 428 and the BM-SC server 426. Therefore, decisions at the RN level, whether determined by the RN 130-1 130-2 or by a network entity, to switch the radio bearer do not impact other network segments.

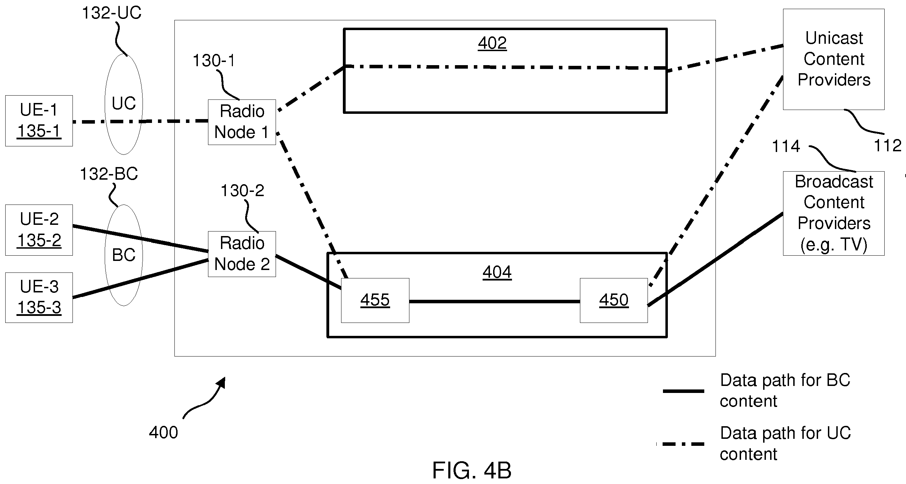

Referring to Figure 4B, in a generic implementation the unicast subsystem 402 receives unicast data traffic and delivers the unicast data traffic to one or more RN as unicast data traffic. The broadcast/multicast subsystem 404 receives both unicast data traffic and broadcast or multicast traffic (sometimes referred to as "mixed unicast/broadcast traffic" or mixed UC/BC content) from content providers 112 114. An input network node 450 receives the mixed unicast/broadcast traffic and transmits it through a broadcast/multicast logical channel to an output network node 455. The output network node 455 is operative to distribute the received mixed unicast/broadcast traffic to one or more RN 130-1 130-2. In some embodiments unicast content data may be converted to a unicast logical channel based on a unicast protocol stack at the output network node 455. In some embodiments, the unicast content data is delivered to the one or more RN 130-1 130-1 on a broadcast channel or a multicast logical channel using a multicast transport over the broadcast/multicast subsystem 404.

RN 130-1 130-2 receive broadcast data traffic, multicast data traffic, or unicast data traffic, as the case may be. In an embodiment, the RN 130-1 130-2 are operative to select a radio bearer type to transmit the received broadcast data traffic, multicast data traffic, and/or unicast data traffic based on operational conditions at that RN 130-1 130-2. In some implementations, the operational conditions may include, for instance a number of recipient UE 135-1 135-2 135-3 at that RN 130-1 130-2.

Referring to Figure 4C, a signaling diagram illustrating the embodiment of Figure 4B is presented. In step 460 the content providers 112 114 transmit to the input network node (NN 1) 450 content data for transport through the broadcast/multicast subsystem 404. In some embodiments, all of the data content is received encoded using a broadcast/multicast protocol stack. In some embodiments, at least some of the data content is received as unicast data traffic using a unicast protocol stack and in step 462 the input network node (NN1) 450 is operative to convert the received unicast data traffic into broadcast data traffic or multicast data traffic using a multicast transport including a broadcast/multicast protocol stack. In step 464 the input network node (NN1) 450 transmits the data content to the output network node (NN2) 455 using a broadcast/multicast logical channel. In steps 466 and 472 the output network node (NN2) 455 transmits the data content towards the RN(s) 130-1 130-2 that serve the recipient UE 135-1 135-2 135-3. In some embodiments, the output network node (NN2) 455 is operative to transmit all data traffic as broadcast data traffic or multicast data traffic using a multicast transport over the broadcat/multicast subsystem 404. In some embodiments, the output network node (NN2) is operative to transmit some of the data traffic as unicast data traffic and some of the data traffic as broadcast or multicast data traffic.

In step 468 radio node 1 130-1 receives the data traffic and determines that the received data traffic should be transmitted using a unicast radio bearer to the intended recipient UE 135-1. In step 470 the radio node 1 130-1 transmits the received data traffic using a unicast radio bearer to the intended recipient UE 135-1 based on the determination in step 468.

In step 474 radio node 2 130-2 receives the data traffic and determines based on context information that the received data traffic should be transmitted using a broadcast radio bearer or a multicast radio bearer to the intended recipient UEs 135-2 135-3. In step 476 the radio node 2 130-2 transmits the received data traffic using a broadcast radio bearer or a multicast radio bearer to the intended recipient UEs 135-2 135-2 based on the determination in step 474. In some embodiments, the context information includes at least one of UE context information, RN context information, and network context information as described above.

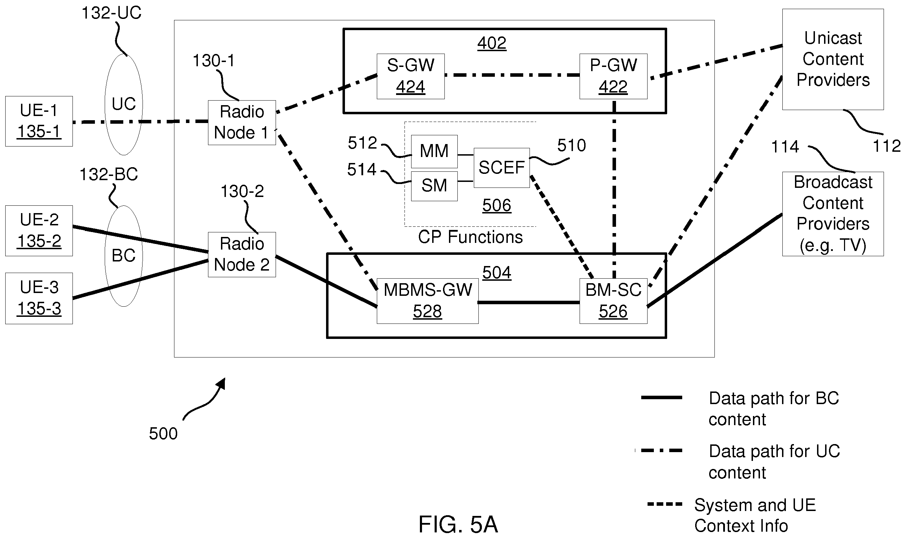

Referring to Figure 5A, an embodiment of a transport subsystem 500 is presented. In the embodiment of Figure 5A, some or all of the content data (unicast content and broadcast/multicast content) is provided to the broadcast/multicast subsystem 504. In the implementation illustrated, the unicast content providers 112 may select between directing unicast data traffic to the unicast subsystem 402 or the broadcast/multicast subsystem 504. As illustrated, the broadcast/multicast subsystem 504 (e.g. MB-SC Server 526) is operative to select either the broadcast/multicast subsystem 504 (BM-SC/MBMS-GW subsystem) or the unicast subsystem 504 (P-GW/S-GW subsystem) depending on network conditions and UE context to send content data to the UEs. In this implementation, it may be selected to send unicast traffic either over the unicast subsystem 402 (P-GW/S-GW subsystem) (e.g. using TCP/IP protocol) or over the broadcast/multicast subsystem 504 (BM-SW/MBMS-GW subsystem) (e.g. using FEC/UDP/IP protocol). In this embodiment, the broadcast data traffic or multicast data traffic is still carried by BM-SC server 526.

In the embodiment illustrated the BM-SC server 526 of the broadcast/multicast subsystem 504 has a CP interface with CP functions 506. In particular, the BM-SC server 526 has an CP interface with a Service Capability Exposure Function (SCEF) 510 that is in communication with a mobility manager (MM) 512 to obtain UE mobility context and a session manager (SM) 514 to obtain connection context to provide session management context (i.e. session context").

In the embodiment of Figure 5A, a network entity such as the broadcast/multicast subsystem 504 is operative to receive content data in the form of data traffic and to select based on context information between the broadcast/multicast subsystem 504 and the unicast subsystem 402 to carry the received data traffic through the RN to the RNs. In this embodiment, additional control plane (CP) functions 506 are provided to allow for traffic selection upstream from the RN 130-1 130-2. In particular, system and UE context information is provided through an exposure function to the broadcast/multicast subsystem 504 to provide RN operational information relevant to determining whether to direct the received data traffic to the unicast subsystem 402 using a unicast transport or the broadcast/multicast subsystem 504 using a multicast transport.

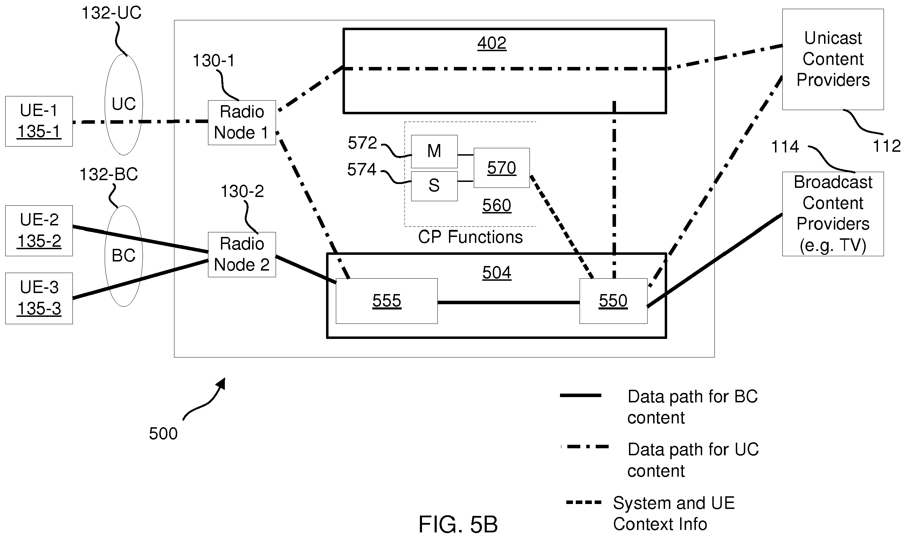

Referring to Figure 5B, an embodiment of a transport subsystem 500 is presented. In the embodiment of Figure 5A, some or all of the data traffic (unicast content data, broadcast content data, and multicast content data) is provided to the broadcast/multicast subsystem 504. In the implementation illustrated, the unicast content providers 112 may select between directing unicast data traffic to the unicast subsystem 402 using a unicast transport or the broadcast/multicast subsystem 504 using a multicast transport. As illustrated, an input network node 550 is logically proximate to an input end of the broadcast/multicast subsystem 504. The input network node 550 operative to select either the broadcast/multicast subsystem or the unicast subsystem 504 depending on network conditions and UE context. In this implementation, the input network node 550 is operative to select between transmitting unicast traffic either over the unicast subsystem 402 using a unicast transport including a unicast protocol stack or over the broadcast/multicast subsystem 504 using a multicast transport including a broadcast/multicast protocol stack.

In the embodiment illustrated the input network node 550 of the broadcast/multicast subsystem 504 has a CP interface with CP functions 560. In particular, the input network node 550 has an CP interface with an exposure function 570 that is operative to obtain UE mobility context from a mobility entity (M) 572 and session context from a session entity (S) 574. The input network node 550 transmits broadcast data traffic and multicast data traffic towards an output network node 555 that is operative to receive the broadcast data traffic and multicast data traffic and to distribute it to one or more RN 130-1 130-2 to complete the transmission to the recipient UE 135-1 135-2 135-3. In some embodiments, the exposure function 570 may be operative to provide access to other control plane functions to provide additional context information including, for instance, RN context information and/or network context information.

In the embodiment of Figure 5B, a network entity such as the broadcast/multicast subsystem 504 is operative to receive content data in the form of data traffic and to select between the broadcast/multicast subsystem 504 and the unicast subsystem 402 to carry the received data traffic through the RAN to the RN. In this embodiment, additional control plane (CP) functions 560 are provided to allow for traffic selection upstream from the RN 130-1 130-2. In particular, system and UE context information is provided through an exposure function to the broadcast/multicast subsystem 504 to provide RN context information, including in some implementations RN operational information relevant to determining whether to direct the received data traffic to the unicast subsystem 402 or the broadcast/multicast subsystem 504.

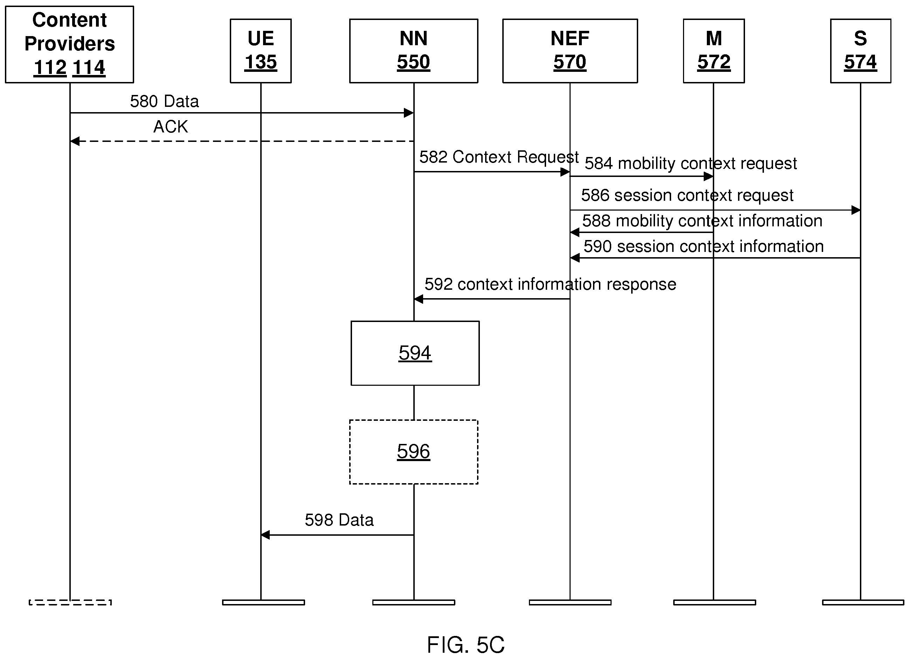

Referring to Figure 5C, in operation in step 580 the content servers 112 114 transmit data to an input network node (NN) 550 that is logically proximate to an input end of a broadcast/multicast subsystem 504. The NN 550 receives data traffic from the content providers 112 114. In step 594 the input network node 550 may evaluate the received data traffic to determine whether some of the traffic may be transmitted over a unicast logical channel or if it should be transmitted over a broadcast/multicast logical channel. To assist the determination, in step 582 the input network node 550 transmits a context request for UE context information to the exposure function 570. In some embodiments, the context information may include one or both of UE mobility context information and UE session context information.. In some embodiments, the context information may include at least one of: mobility information associated with the UE; session information associated with the content data and/or the UE; an indication of a requirement to deliver the unicast content data to a plurality of UEs; RN context related to at least one operational condition at the RN; and, network loading conditions. In the embodiment of Figure 5C the context information comprises both UE mobility context information and UE session context information.

In step 584 the exposure function 570 transmits a mobility context request to the M 572 and in step 586 the exposure function 570 transmits a session context request to the S 574 to obtain requisite UE mobility and session context information related to the received data traffic. In step 588 the M 572 transmits mobility context information to the exposure function 570 and in step 590 the S 574 transmits session context information to the exposure function 570 in response to the mobility context request and the session context request respectively. In step 594 the NN 550 determines whether the received data traffic should be transported on a unicast logical channel or whether the received data traffic should be transmitted on a broadcast/multicast logical channel based on the context information. In the event network node 550 determines that the received data traffic should be transmitted on a broadcast/multicast logical channel, then in step 596 the NN 550 completes its processing and handling of the received data traffic. In some embodiments, the processing may include converting unicast data traffic from a unicast protocol stack into broadcast data traffic or multicast data traffic using a broadcast/multicast protocol stack for multicast transport. In step 598 the NN 440 transmits the data towards the UE 135. Where the received data traffic is to be transmitted on the broadcast/multicast logical channel the data is transmitted through the broadcast/multicast subsystem 550 towards an output network node 555 for delivery to the RN 130-1 130-2.

In the event the NN 550 determines that the received data should be transmitted on a unicast logical channel, then in step 598 the NN 550 transmits the received data traffic to the unicast subsystem 402 for transport over a unicast logical channel to the recipient UE 135.

By way of example, in a situation where an intended recipient UE 135 is moving, the channel capacity can change quickly and a unicast transport (i.e. TCP) may perform poorly. In this case, based on the mobility context of the UE, a broadcast channel or multicast logical channel using a multicast transport would be preferred over the unicast logical channel. In another scenario, the UE 135 may have multiple connections to multiple RNs 130-1 130-2 of the same Radio Access Technology (RAT) or a different RAT. In such scenarios where the UE 135 may obtain packets from different connections, it may be preferable based on the received session context information to transport the data traffic over the broadcast channel or multicast logical channel. The broadcast and multicast logical channels using a multicast transport that supports the employment of fountain coding to encode data packets and use, for instance, a multicast protocol stack such as UDP/IP protocol. Although UDP is typically more resource intensive than TCP, it may avoid many of the TCP problems addressed above.

In this case, the NN 550 provides multicast transport by employing fountain coding functions, generating fountain coded packets, and sending the generated fountain coded packets to the output network node 555. The output network node 555 then distributes the coded packets to the RNs 130-1 130-2. Each of the RNs 130-1 130-2 may then set up unicast GBR bearers 132-UC to the UE 135-1, over which the distributed coded packets are transmitted to the served UE 135-1.

If the UE 135-1 is static (no mobility), it is likely preferable to use a unicast transport channel using a unicast transport supported by the unicast subsystem 402. In this case the data traffic may be handled, in 4G for instance, using TCP/IP protocol and the unicast subsystem 402 (P-GW/S-GW) for delivery of unicast streams to minimise resource utilization. When the input network node 550 selects a suitable transportation mode, it can inform Control Plane (CP) functions 560, through its CP interface with the EF 710, of the selected transportation mode so that an end-to-end bearer between the NN 550 and the UE 135-1 can be established.

During the data session, if the UE context changes, the CP functions 560 can inform the NN 550 of the updated UE context. The NN 550 may then select a new transportation subsystem, and associated transport type, if needed. If the transport subsystem changes, NN 550 may inform the CP functions 560 so that a new end-to-end bearer can be established.

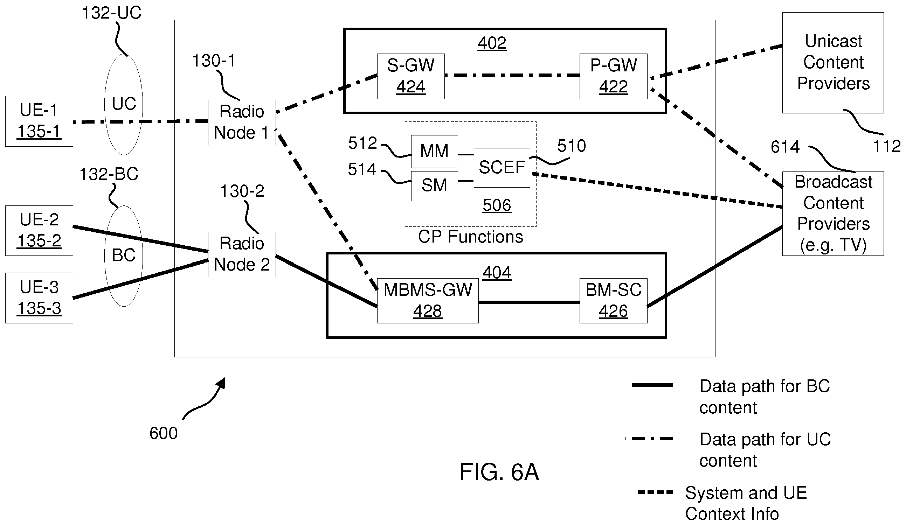

Referring to Figure 6A, an embodiment of a transport subsystem 600 is presented. In the alternate implementation of Figure 6A, the transport subsystem 600 is operative to enable a third party content provider 614 to select between a unicast logical channel using a unicast transport, and a broadcast channel or a multicast logical channel using a multicast transport based upon feedback such as context information including system, network, RN, and UE context information provided by the SCEF 510. The feedback may include, for instance, context relating to the UE accessing the content such as mobility context, session context, network loading, and/or RN 130-1 130-2 context.

In this implementation, the CP interface to the SCEF 510 is opened to the third party content provider 614. Accordingly, the SCEF 510 is operative to provide context information such as, for instance, network and/or UE context information, to the third party content provider 614 so that the third party content provider 614 can select a suitable transport subsystem and associated transport type, either the unicast subsystem 402 (e.g. P-GW/S-GW subsystem) for unicast transport of a unicast session or the broadcast/multicast subsystem 404 (e.g. MBMS subsystem) for broadcast or multicast transport of the unicast session. In this example, the operation of the unicast subsystem 402 and broadcast/multicast subsystem 404 may operate as described above for Figure 4A, with the selection made by the third content provider 614 augmented by use of the context information to inform the transport selection.

In the case of unicast sessions over the unicast subsystem 402 (e.g. P-GW/S-GW subsystem), the content provider 614 has the option to setup a specific protocol, including TCP/IP or FEC over UDP/IP protocols transparent to the P-GW 424 and S-GW 422.

If the broadcast/multicast subsystem 404 (e.g. MBMS subsystem) is selected for unicast sessions over the broadcast/multicast logical channel, and for some specific UEs 135-1, the unicast subsystem 404 (e.g. BM-SC server 426) may employ the MBMS FEC/UDP/IP protocol stack. In this case, coded packets can be sent to the MBMS-GW 428 by the BM-SC server 426. The MBMS-GW 428 can distribute the coded packets to one or multiple RNs 130-1 130-2 as may be required. Depending on the number of UEs receiving the same data stream, each RN 130-1 130-2 will select a suitable radio bearer, either a unicast radio bearer 132-UC (e.g. unicast GBR bearer) or a broadcast radio bearer or a multicast radio bearer 132-BC (e.g. broadcast/multicast eMBMS bearer), to send data to the UE 135-1.

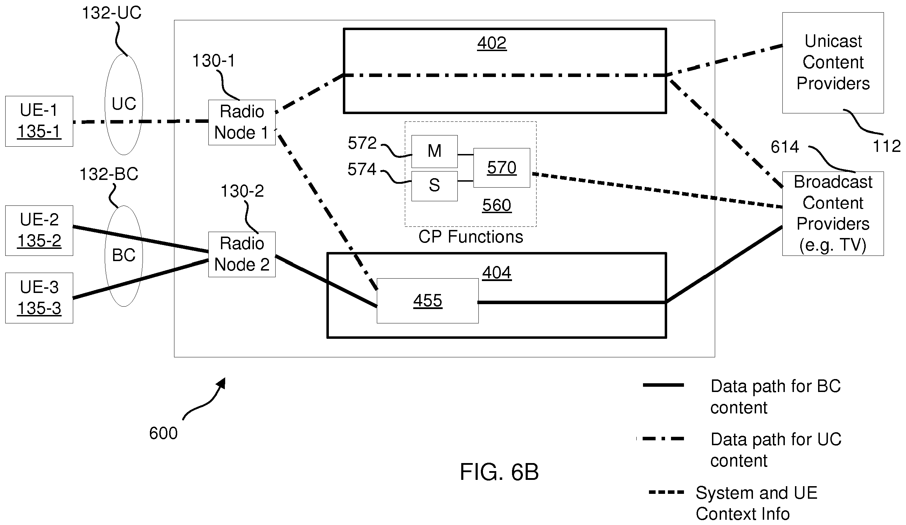

Referring to Figure 6B, an embodiment of a transport subsystem 600 is presented. In the alternate implementation of Figure 6B, the transport subsystem 600 is operative to enable a third party network node of a third party content provider 614 to select between a unicast logical channel using a unicast transport, and a broadcast channel or a multicast logical channel using a multicast transport based upon feedback such as context information, including, for instance, system and UE context information provided by an exposure function such as exposure function 570. The feedback may include, for instance, context information relating to the UE accessing the content such as mobility context, session context, network context, and/or RN 130-1 130-2 context.

In this implementation, the CP interface to the exposure function 570 is opened to the third party network node of the content providers 614. Accordingly, the exposure function 570 is operative to provide context information to the third party network node so that the third party content provider 614 can select a suitable transport subsystem and associated transport type, either the unicast subsystem 402 for unicast transport of a unicast session or the broadcast/multicast subsystem 404 for multicast transport of a unicast session. In this example, the operation of the unicast subsystem 402 and broadcast/multicast subsystem 404 may operate as described above for Figure 4B, with the selection made by the third party network node augmented by use of the context information.

In the case of unicast sessions over the unicast subsystem 402, the third party network node may be operative to selectively setup a specific unicast transport protocol that is transparent to the unicast subsystem 402.

If the broadcast/multicast subsystem 404 is selected by the third party network node for transporting a unicast content session, the data may be encoded using a multicast protocol stack for multicast transport over the broadcast channel or the multicast logical channel. The broadcast/multicast subsystem 404 can distribute the coded packets to one or multiple RNs 130-1 130-2 as may be required. Depending on the number of UEs receiving the same data stream, each RN 130-1 130-2 will select a suitable radio bearer, either a unicast bearer 132-UC (e.g. unicast GBR bearer) or a broadcast radio bearer or a multicast bearer 132-BC (e.g. broadcast/multicast eMBMS bearer), to send data to the UE 135-1.

In operation, the embodiment of Figure 6B operates substantially similar to the signalling diagram of Figure 5C, with the exception that operations performed by the input network node 550 in Figure 5C are performed by the third party network node of the content provider 614 in making the selection between the unicast subsystem 402 and the broadcast/multicast subsystem 404.

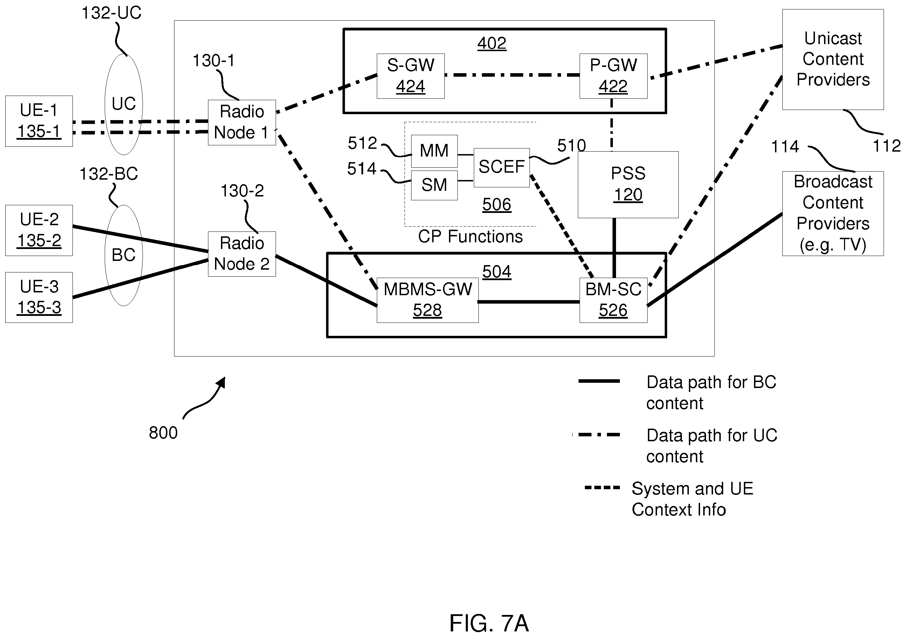

Referring to Figure 7A, an embodiment of a transport subsystem 800 is presented. In the embodiment of Figure 7A, a PSS 120 is included to provide input to the BM-SC server 526 as described above with reference to Figure 1. In the embodiment of Figure 7A, the broadcast/multicast subsystem 504 (e.g. BM-SC server 526) is operative to receive streaming content from the PSS 120. The broadcast/multicast subsystem 504 is further operative to obtain context information from the SCEF 510 related to the streaming content, before delivering it to the RN 120-2 130-2 as described above with reference to Figure 5A. In this implementation, the unicast subsystem 402 is also operative to receive streaming content from the PSS 120 as is the case in Figure 1B.

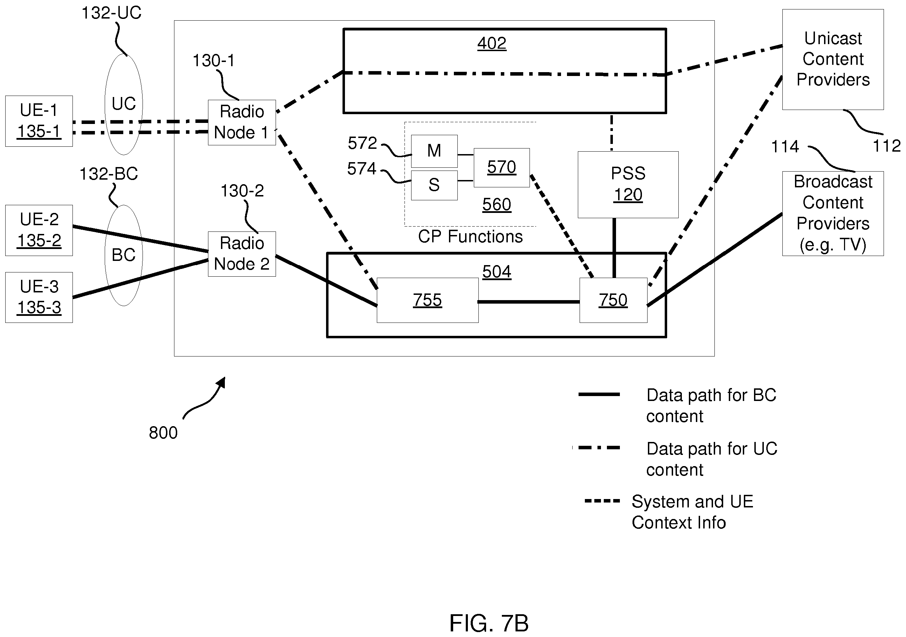

Referring to Figure 7B, an embodiment of a transport subsystem 800 is presented. In the embodiment of Figure 7b, a PSS 120 is included to provide input to an input network node 750 of the broadcast/multicast subsystem 504. In the embodiment of Figure 7B, the broadcast/multicast subsystem 504 is operative to receive streaming content from the PSS 120. The broadcast/multicast subsystem 504 is further operative to obtain context information from the exposure function 570 related to the streaming content, before delivering it to the RN 130-1 130-2 as described above with reference to Figure 5B. In this implementation, the unicast subsystem 402 is also operative to receive streaming content from the PSS 120 as is the case in Figure 1.

In operation, the embodiment of Figure 7B operates substantially similar to the signalling diagram of Figure 5C, with the exception that the input network node 750 in Figure 5C receives content from the PSS 120.

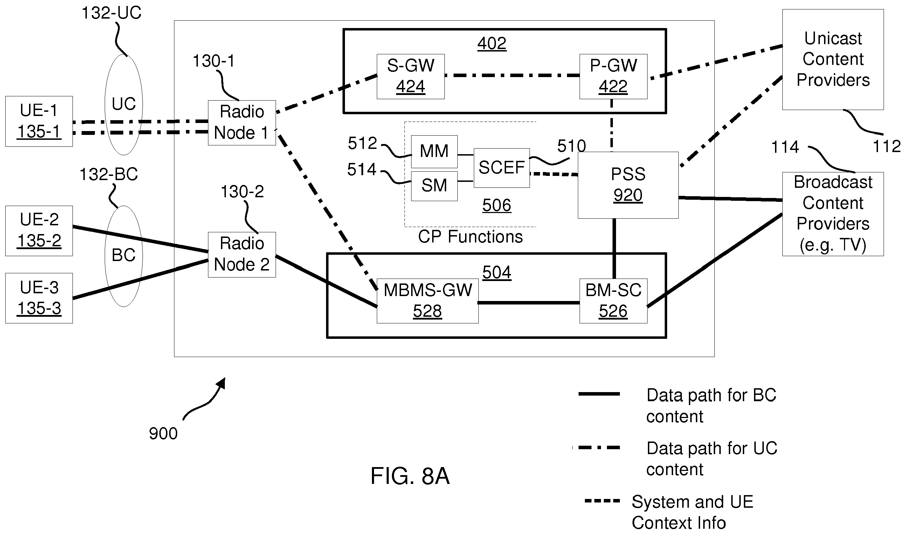

Referring to Figure 8A, an embodiment of a transport subsystem 900 is presented. In the embodiment of Figure 8A, a PSS 920 is operative to both receive streaming traffic from the third party content providers 112 114 and to access the CP interface to obtain context information from the SCEF 510. The context information can be used by the PSS 920 to select the data encoding used to code the data before forwarding the streaming data to the BM-SC server 526. The PSS 120 may be further operative to perform an adaptive selection between the unicast transport subsystem 402 and the broadcast/multicast transport sub-system 504, made in accordance with the UE context.
For instance, UC traffic in the following context may be directed by the PSS 920 to be served by the broadcast/multicast subsystem 504 (MBMS sub-system). As an example, high mobility users downloading large files (video streaming for example), or users having multiple simultaneous connections: 4G/5G/WiFi or multiple connections to RNs 130-1 130-2 of the same network (e.g. dual connection in 4G and 5G). UE having a plurality of different connections (or connection options) can receive data through a proxy server in the network. For example, one of the MB-SC server 526 or the PSS 920 can provide proxy functions. The proxy server can have a connection to the 510 to obtain context information about network resource availability, session context, and UE mobility context. When a UE 135-1 135-2 135-3 sends content requests to the proxy server, the proxy server can determine which of the unicast transport subsystem 402 and the broadcast/multicast subsystem 504 (e.g. P-GW/S-GW or MB-SC/MBSG-GW) is best suited to transport the content. Alternatively, a new CP function in CN CP can determine the best transport subsystem and transport type for service delivery. Either the proxy server (e.g. PSS 920) or the CP function will inform the recipient UE 135-1 135-2 135.3 of the selected transport subsystem, type, and protocols.

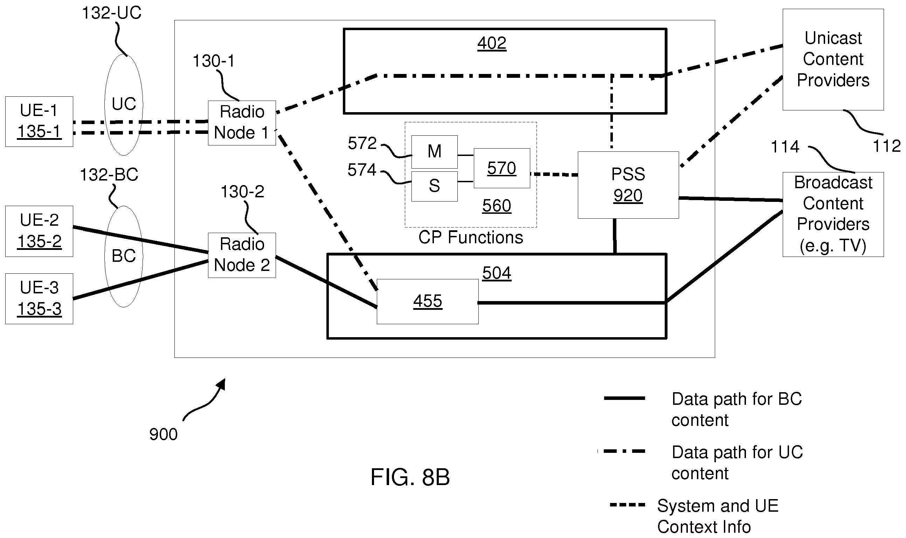

Referring to Figure 8B, an embodiment of a transport subsystem 900 is presented. In the embodiment of Figure 8B, a PSS 920 is operative as an input network node to both receive streaming traffic from the third party content providers 112 114 and to access the CP functions 560 through the CP interface to obtain context information from the exposure function 570. The context information can be used by the PSS 920 to select the data encoding used to code the data before forwarding the streaming data to either the broadcast/multicast subsystem 504 or the unicast subsystem 402. The PSS 120 may be further operative to perform an adaptive selection between the unicast transport subsystem 402 and the broadcast/multicast transport sub-system 504, made in accordance with the UE context.

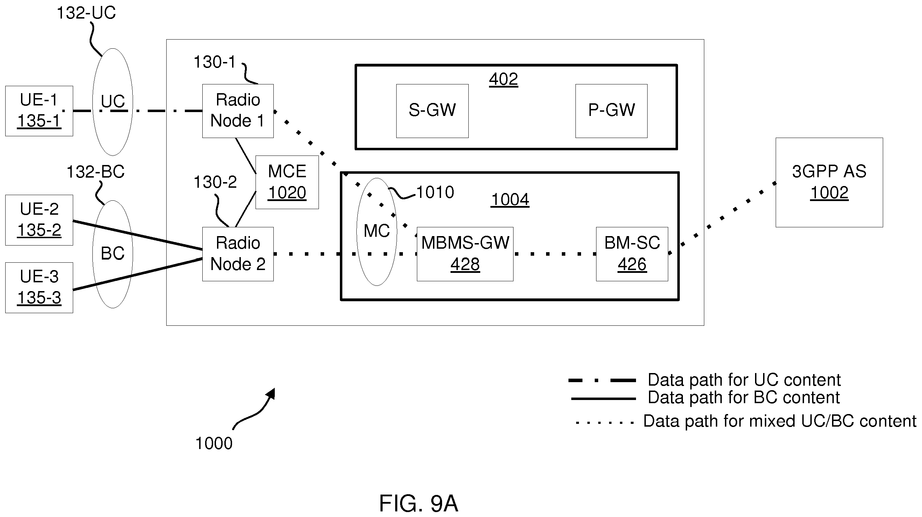

Referring to Figure 9A, in an embodiment of a managed broadcast service (e.g. TV service) may be supported by a unified solution using both and/or one of unicast radio bearers 132-UC and broadcast radio bearers 132-BC to deliver the broadcast services to receiving UEs 135-1 135-2 135-3 using Evolved Packet switching System (EPS) bearers. The decision to use unicast radio bearers 132-UC or broadcast radio bearers or multicast radio bearers 132-BC may be made at the RN level, allowing for efficient selection of the radio access network delivery format based upon a number of UE 135-1 135-2 135-3 accessing the broadcast service in each radio cell.

The implementation uses mixed operation of the single-cell point-to-multipoint channel (SC-PTM) and Multicast-Broadcast Single-Frequency Network (MBSFN) channel in an MBMS session for individual RNs 130-1 130-2 for delivering managed content, such as TV channels, to a single UE 135-1 135-2 135-3 or multiple UEs 135-1 135-2 135-3 depending on the number of participating UEs 135-1 135-2 135-3 within the serving areas of the RN 130-1 130-2 (e.g. in a cell). This solution is complementary to architectures where a broadcast service (e.g. TV channel) can be either delivered either by a pure unicast bearer through a unicast subsystem 402 (e.g. P-GW/S-GW/RN) or by a broadcast channel via a broadcast/multicast subsystem (e.g. MBMS subsystem 1004) based upon decisions made at the broadcast content provider level.

In a geographic area serving by a BM-SC, the total number of UEs watching a broadcast service should be much more than one to justify the support of a broadcast bearer. This may be one of the reasons that broadcast content providers need MNOs to provide efficient content delivery methods. At the cell level, there can be one or several UE watching the same broadcast service. Therefore, the default IP transmission from BM-SC to RNs can be multicast for managed TV service for better resource utilization in CN.

In an embodiment, the broadcast multicast subsystem 1004 (e.g. MBMS subsystem) is operative to provide hybrid MBSFN and SC-PTM operation. In particular, the transmission from MBMS-GW 428 to multiple RNs 130-1 130-2 is already handled as an IP multicast, where each RN 130-1 130-2 can join or leave an MBMS session. In each RN 130-1 130-2, either a single-cell point-to-multipoint (SC-PTM) channel or MBSFN (broadcast) transmission can be selected depending on the number of participating UE 135-1 135-2 135-3.

The above embodiment may be implemented in a manner than provides some benefits to the core network. Employing the same BM-SC/MBMS-GW infrastructure for managed TV services can help to reduce the consumption of bandwidth resources resulting from a plurality of parallel unicast sessions of the same broadcast service (e.g. TV channel). The reduction could amount to a reduction of hundreds or even thousands of unicast sessions for a single broadcast service, depending on the number of RN 130-1 130-2s in an MBMS service area. This may also help mitigate possible congestion in PSS servers due to many unicast sessions accessing the same broadcast service. There may also be a reduction of the signalling overhead caused by bearer setting changes when users switch between unicast bearer (by P-GW/S-GW) to broadcast bearer (by MBMS subsystem) which are encountered in the currently implement unicast solution.

The above embodiment may also be implemented in a manner that process some benefits in the RAN. Use of the method may reduce packet duplication due to transmitting a plurality of otherwise duplicated unicast sessions, by using either a multicast logical channel (SC-PTM) or a broadcast channel (MBSFN). Independent operation of the CN and the RN with respect to the content delivery mechanisms allow for both the CN and RN to select the content delivery method that is best for either the CN or the RN. It should also be noted that the RN can change the radio bearer without affecting the CN bearer.

Some implementations may also deliver benefits for the UE 135-1 135-2 135-3. Improved quality of service may be realised by avoiding potential issues of TCP/IP in mobile wireless channels. Additionally, potential service disruptions may be avoided or mitigated when switching between a unicast channel supported by the unicast transport subsystem 404 (e.g. served by P-GW/S-GW) and a broadcast channel supported by the broadcast/multicast transport subsystem 1004 (e.g. served by BM-SC/MBMS-GW).

There should be no overload issue due to supporting managed point-to-multipoint TV traffic by the broadcast/multicast subsystem 1004 (e.g. MBMS subsystem). For managed broadcast services (e.g. TV services), the RAN is likely to be able to support the most resource-demanding scenario, where the number of users accessing the same broadcast service is significant enough to set up a MBSFN transmission in the RAN. The number of managed broadcast services is thus highly dependent on the capacity of the MBSFN transmission in the RAN, and with proper design of the broadcast/multicast subsystem 1004 (e.g. MBMS subsystem), there should be no overload issue.

Referring again to Figure 9A, an embodiment of a transport subsystem 1000 for EPS is illustrated. In this solution, the BM-SC server 426 receives packets of broadcast services (e.g. multiple TV channels) from the 3rd party broadcast content provider application server(s) (3GPP AS) 1002. Then BM-SC server 426 employs existing MBMS protocols for multicast/broadcast delivery (at least within the CN). The coded packets are sent from BM-SC server 426 to the MBMS-GW 428. The MBMS-GW 428 distributes coded packets to the RNs 130-1 130-2 using IP multicast delivery 1010 (MC). Depending on the popularity of each broadcast service (e.g. a particular TV channel or show), a Multi-cell Coordination Entity (MCE) 1020 can set up either an MBSFN radio bearer or single-cell point-to-multipoint (SC-PTM) radio bearer in each RN 130-1 130-2. In some implementations, either the RAN or the CN can provide a consumption report to the MCE 1020 to enable the MCE 1020 to determine the most efficient radio bearer type for each RN 130-1 130-2 based on RN-specific operational conditions. The consumption report provides information on the number of users per RN that are consuming the same data content.

The existing MBMS transport protocol stack (FEC/UDP/IP) and MBMS subsystem may be used to manage broadcast services regardless of the radio bearer setting (unicast radio bearers, multicast radio bearers, and broadcast radio bearers) in the RAN side. In comparison, the current the MBMS solution in EPS relies upon the TCP/IP protocol for unicast data traffic and FEC/UDP/IP for broadcast data traffic and multicast data traffic. The selection of MBSFN or SC-PTM radio bearers is currently determined by the MCE 1020 in the RAN, based on the number of participating UEs 135-1 135-2 135-3 provided by either a counting procedure performed by the RN 130-1 130-2s or a consumption report provided, for instance, from the BM-SC server 426.

When the number of UEs 135-1 135-2 135-3 per cell watching the same broadcast service is small, the SC-PTM transmission over PDSCH can be used. Because the FEC layer may generate significant quantities of redundant packets, e.g. 40% redundancy, the UE may receive enough packets to decode the original file before the multicast session completes. In this scenario, the UE 135-1 135-2 135-3 may send an acknowledgment message to the serving RN 130-1 130-2 allowing the RN 130-1 130-2 to stop sending redundant packets, saving air-interface resources.

Some aspects of the above solution are already supported by the current EPS:
Support multicast from the MBMS-GW 428 to RN 130-1 130-2s;
Support Single-Cell MBMS Traffic Channel (SC-MTCH) over PDSCH and multi-cell MBMS Traffic Channel (MTCH) over MBSFN; In some implementations, the MCE 1020 is operative to select between either SC-PTM (Single-Cell Point to Multipoint) or MBSFN in each RN 130-1 130-2 and to transmit an instruction to that RN 130-1 130-2 indicating the determined radio bearer type for the RN 130-1 130-2 to make that selection. Generally, the MCE 1020 is operative to make the selection based on context information. In some embodiments, the context information may include RN context related to at least one operational condition at the one or more RN 130-1 130-2 served by that MCE 1020. The at least one operational condition may include, for instance, a number of UE served by each of the RN 130-1 130-2, and/or UE mobility context information related to the served UE, and/or UE session context information related to the served UE. The MCE 1020 may obtain the mobility context information and the session context information either from the RN 130-1 130-2 or from an exposure function providing access to the relevant CN functions.
Support consumption reporting for each of the broadcast services (e.g. TV channels): RN 130-1 130-2 (and also the BM-SC server 426) can produce the consumption report to allow the MCE 1020 to determine the most suitable radio bearer type in each RN 130-1 130-2.

MCE 1020 informs MBMS-GW 428 which RN 130-1 130-2(s) will join or leave the MBMS session. If a RN joins the MBMS session, the MBMS-GW 428 will include this RN node in the list of IP destinations for broadcast/multicast transmission. Vice versa, if a RN leaves the MBMS session, the MBMS-GW 428 will exclude this RN from the list of IP destinations for broadcast/multicast transmission.

In some implementations, the conventional counting procedure in the RAN can be used to report the number of UEs 135-1 135-2 135-3 to the BM-SC server if required.

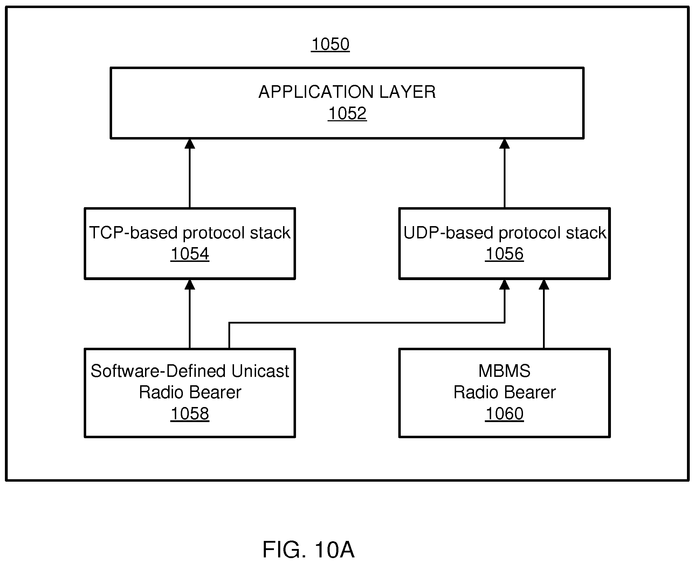

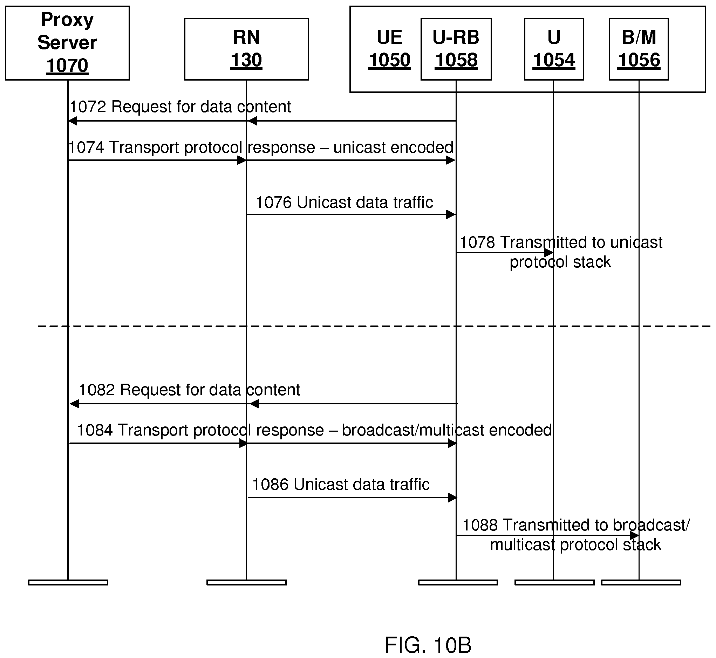

The architecture of Figure 10 may require additional signalling messages and procedures. The RN may require additional signalling in order to enable mixed operation of SC-PTM and MBFSN in each MBMS session. In one embodiment, the network can be configured to always use multicast delivery or broadcast delivery to RN 130-1 130-2s in the MBMS area if more than one UE is accessing a broadcast service, or in scenarios in which a UE 135-1 135-2 135-3 is moving into an area with an active MBMS service for that broadcast service. The conventional behaviour of the MBMS sub-system assumes that either SC-PTM or MBSFN transmission is active in one MBMS service area. Additional MBMS bearer context information may be provided, including a list of cell IDs using MBSFN transmission and list of cell IDs using SC-PTM, with the number of participating UE135-1 135-2 135-3 in each cell. When the MBMS bearer context changes, the BM-SC server 426 can initiate a session update procedure for E-UTRAN. For example, the number of participating UE in a cell may be measured, and when the number crosses a threshold, a decision can be made by the MCE 1020 to change the radio bearer (i.e. SC-PTM or MBSFN) in RN 130-1 130-2. Upon determining that the radio bearer should be changed, the MCE 1020 is operative to transmit an instruction to the RN 130-1 130-2. The RN 130-1 130-2 is operative to receive the instruction to select the appropriate radio bearer based on the instruction.

Signalling from the UE 135-1 135-2 135-3 to RN 130-1 130-2 may include a message indicating that the video file has been fully decoded in scenarios in which application-layer FEC is used. This may recue the transmission of redundant packets and thus aid in reducing the air-interface usage. UE 135-1 135-2 135-3 and RN 130-1 130-2 can support radio bearer switching between SC-PTM and MBSFN radio bearers without modifying other bearer segments between RN 130-1 130-2s and BM-SC server 426 and without service disruption to the UEs135-1 135-2 135-3.

The solution provides embodiments that may allow for service continuity. In an optional aspect, when UEs move, only the radio bearers between each UE 135-1 135-2 135-3 and a respective RN 130-1 130-2 need to change, while the other bearer segments, and transport protocol stack, between RN 130-1 130-2s to the MBMS-GW 428 and between the MBMS-GW 428 to the BM-SC server 426 can be statically maintained during an MBMS session. This optional aspect allows for reduced maintenance traffic and minimal service interruption time as any change in bearer setup at the RN 130-1 130-2 level is transparent to the rest of the CN and RN.

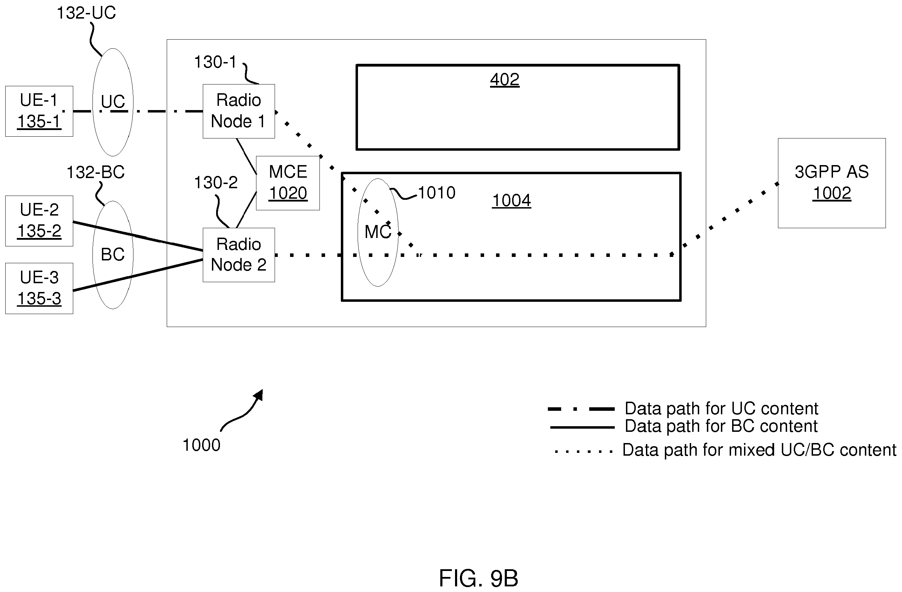

Referring again to Figure 9B, an embodiment of a transport subsystem 1000 for EPS is illustrated. The embodiment of Figure 9B is substantially equivalent to the embodiment of Figure 9A, with the exception that functionality of the broadcast/multicast subsystem 1004 is not broken out into sub-entities such as a BM-SC server 426 or MBMS-GW 428. In operation, the broadcast/multicast subsystem 1004 receives packets of broadcast services (e.g. multiple TV channels) from the 3rd party broadcast content provider application server(s) (3GPP AS) 1002. Then broadcast/multicast subsystem transports the received packets using MBMS protocols for multicast/broadcast delivery. At the output from the broadcast/multicast subsystem 1004, coded packets are distributed to the RNs 130-1 130-2 using IP multicast delivery 1010 (MC). The Multi-cell Coordination Entity (MCE) 1020 determines whether to the content should be distributed from each RN 130-1 130-2 using either a unicast radio bearer 132-UC or a broadcast radio bearer or multicast radio bearer 132-BC. In some implementations, either the RN or the CN can provide a consumption report to the MCE 1020 to enable the MCE 1020 to determine the most efficient radio bearer type for each RN 130-1 130-2 based on RN-specific operational conditions. In some embodiments, the MCE 1020 may further select a radio bearer type based on a mobility context and/or session context of the UE. In these embodiments, the MCE 1020 may further have access to a CP interface to access relevant context information to make the selection. After selecting a radio bearer type, the MCE 1020 is operative to transmit an instruction to the RN 130-1 130-2. The RN 130-1 130-2 is operative to receive the instruction, and to select the appropriate radio bearer responsive to the instruction.

Figure 10A is a block diagram of a UE 1050 operative to work with embodiments of the systems and methods disclosed herein. In the embodiment of Figure 10A, the UE 1050 is operative to support a conventional broadcast radio bearer or multicast radio bearer 1060 (e.g. MBMS radio bearer) which supports a conventional broadcast/multicast protocol stack 1056 (e.g. UDP-based protocol stack. Data traffic received through the broadcast radio bearer or multicast radio bearer 1060 is processed through the broadcast/multicast protocol stack 1056 for communication to an application layer 1052. The UE 1050 further includes a unicast radio bearer 1058 (e.g. a software-defined unicast radio bearer) that is operative to selectively switch between a unicast protocol stack 1054 (e.g. TCP-based protocol stack) and the broadcast/multicast protocol stack 1056 (e.g. UDP-based protocol stack). Data traffic received through the unicast radio bearer 1058 is selectively processed either through the unicast protocol stack 1054 or the broadcast/multicast protocol stack 1056 for communication to an application layer 1052. Accordingly, the UE 1050 is operative to receive both unicast encoded data traffic and broadcast/multicast encoded data traffic using the unicast radio bearer 1058.

Referring to Figure 10B a signalling diagram illustrates an embodiment of operation of UE 1050. In a first embodiment, content data in the form data traffic is to be encoded as unicast data traffic and transmitted on a broadcast radio bearer or a multicast radio bearer 1060. In step 1072 the UE 1050 transmits a request for data content to a network entity. In the example of Figure 10B, the network entity is a proxy server 1070. In step 1074 the network entity, e.g. proxy server 1070, transmits an acknowledgement of the request for data content that includes a transport protocol response indicating a protocol stack (in this case a unicast protocol stack) to be used with the delivered data content. The UE 1050 receives the transport protocol response. In step 1076 the UE 1050 receives unicast data traffic transmitted by the serving RN 130. Based on the transport protocol response in step 1078 the received data traffic is directed to the unicast protocol stack 1054 for processing and delivery to the application layer 1052.In a second embodiment, the data traffic is to be encoded as multicast data traffic or broadcast data traffic and transmitted on a unicast radio bearer. In step 1082 the UE 1050 transmits a request for data content to a network entity. In the example of Figure 10B, the network entity is a proxy server 1070. In step 1084 the network entity, e.g. proxy server 1070, transmits an acknowledgement of the request for data content that includes a transport protocol response indicating a protocol stack (in this case a broadcast/multicast protocol stack) to be used with the delivered data content. The UE 1050 receives the transport protocol response. In step 1086 the UE 1050 receives the broadcast data traffic or multicast data traffic transmitted by the serving RN 130 on a unicast radio bearer. Based on the transport protocol response in step 1088 the received data traffic is directed to the broadcast/multicast protocol stack 1054 for processing and delivery to the application layer 1052.

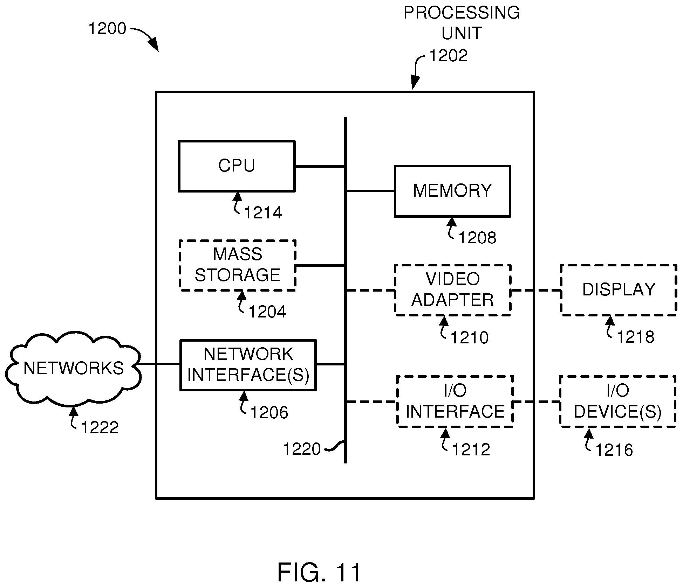

Figure 11 is a block diagram of an embodiment of a computing system 1200 that may be used for implementing the devices and methods disclosed herein. In particular, the network nodes may each include one or more computing systems 1200. The network functions described above may be instantiated by execution on one or more computing systems 1200. In some aspects, a network function may be instantiated across a plurality of computing systems 1200 across a plurality of geographic locations. The UE described above in Figures 10A and 10B may comprise a computing system 1200 adapted to perform the methods described herein.

Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 1200 includes a processing unit 1202. The processing unit 1202 typically includes a central processing unit (CPU) 1214, a bus 1220 and a memory 1208, and may optionally also include a mass storage device 1204, a video adapter 1210, and an I/O interface 1212 (shown in dashed lines). The computing system 1200 may further include one or more network interface(s) 1206 for connecting the computing system 1200 to communication networks 1222.

The CPU 1214 may comprise any type of electronic data processor, and may include one or more cores or processing elements. The memory 1208 may comprise any type of non-transitory system memory such as static random access memory (SRAM), dynamic random access memory (DRAM), synchronous DRAM (SDRAM), read-only memory (ROM), or a combination thereof. In an embodiment, the memory 1208 may include ROM for use at boot-up, and DRAM for program and data storage for use while executing programs. The bus 1220 may be one or more of any type of several bus architectures including a memory bus or memory controller, a peripheral bus, or a video bus.

The mass storage 1204 may comprise any type of non-transitory storage device configured to store data, programs, and other information and to make the data, programs, and other information accessible via the bus 1220. The mass storage 1204 may comprise, for example, one or more of a solid state drive, hard disk drive, a magnetic disk drive, an optical disk drive, or any computer program product configured to store data and machine executable program code. In some implementations, one or more of the components such as the mass storage 1204 may be connected to the processing unit 802 through network interface 1206 or through I/O interface 1212, rather than directly to the bus 1220. According to certain embodiments, the memory 1208 or mass storage 1204 have recorded thereon statements an instructions executable by the processor for performing the aforementioned functions and steps.

The video adapter 1210 and the I/O interface 1212 provide optional interfaces to couple external input and output devices to the processing unit 1202. Examples of input and output devices include a display 1218 coupled to the video adapter 1210 and an I/O device 1216 such as a touch-screen coupled to the I/O interface 1212. Other devices may be coupled to the processing unit 1202, and additional or fewer interfaces may be utilized. For example, a serial interface such as Universal Serial Bus (USB) (not shown) may be used to provide an interface for an external device. Alternatively, the computing system 1200 may rely upon the network interface(s) 1206 for connection to available mass storage(s), video adapter(s) 1210, and I/O interface(s) 1212 available on the networks 1222.

It will be readily understood that, throughout the preceding discussion, the above-described network functionalities and operations may correspond to a method for use in supporting operation of a communication network, such as a 3GPP standards-based communication network 5G wireless communication network. The method may involve computer-implemented functions, namely functions which are implemented by one or more computing, communication and/or memory components of the network infrastructure. These components may take various forms, such as specific servers or general-purpose computing, communication and/or memory devices which are configured to provide the required functionality through virtualization technologies. The method may involve the operation of one or more network components in order to improve the operation of the network. As such, with the communication network viewed as an apparatus, embodiments of the present invention may be directed to improving internal operations of the communication network.

In an embodiment, a system and method is provided for delivering unicast content data as broadcast data traffic or multicast data traffic over a broadcast/multicast logical channel of a communication network. In some implementations, a network node of the communication network is operative to transmit unicast content intended for a single recipient UE on a broadcast/multicast logical channel of the communication network to two or more radio access network nodes RN based upon a mobility context of the recipient UE.

In an embodiment, a system and method is provided for delivering broadcast data traffic or multicast data traffic over a unicast logical channel of a communication network. In some implementations, a network controller is operative to evaluate UE context information and to transmit broadcast data traffic or multicast data traffic over one or more unicast logical channels to a corresponding one or more recipient UE.

In some implementations, a system and method is provided for transporting unicast content as broadcast data traffic or multicast data traffic over a broadcast/multicast logical channel to an intended recipient UE. The system and method includes one or more RN operative to determine whether to transmit the unicast content on a broadcast channel, a multicast logical channel, or a unicast logical channel based on operational conditions at the one or more RN. In some implementations, the operational conditions include a number of intended recipient UE connected to that RN. In some implementations, the operational conditions include at least one of mobility context and session context of the intended recipient UE. In some implementations, the operational conditions include an evaluation of data consumption and/or data demand on at least one of the unicast radio channel, the broadcast radio channel and the multicast radio channel.

In an embodiment, a system and method is provided for transporting broadcast data traffic or a multicast data traffic on a broadcast channel to at least one intended recipient UE. The system and method includes at least one RN operative to determine whether to transmit the broadcast data traffic or multicast data traffic on a broadcast radio channel, a multicast radio channel, or a unicast radio channel based on operational conditions at each RN. In some implementations, the operational conditions include a number of intended recipient UE connected to that RN. In some implementations, the operational conditions include mobility context of the one or more intended recipient UE. In some implementations, the operational conditions include session context of the one or more intended recipient UE. In some implementations, the operational conditions include an evaluation of data consumption and/or data demand on at least one of the unicast radio channel, the broadcast radio channel, and the multicast radio channel.

In an embodiment, a system and method is provided for a network node operative to receive data traffic on a broadcast channel or a /multicast logical channel, the data traffic intended for one or more recipient UE and to selectively transmit the received data traffic on a unicast logical channel, a broadcast channel or a multicast logical channel to each of a corresponding one or more recipient RN serving the one or more recipient UE. In some implementations, the selection is based, at least in part, upon context information of the one or more recipient UE. In some implementations, the network node may be further operative to, for at least one RN, selectively transmit the received data traffic on a unicast logical channel, a broadcast channel, or a multicast logical channel to that RN based upon context information of the one or more recipient UE and/or operational conditions at that RN.

In an embodiment, a system and method is provided for a network node of a communication network to be operative to receive unicast data traffic intended for a unicast recipient UE and/or broadcast data traffic intended for one or more broadcast recipient UE and/or multicast data traffic intended for one or more multicast recipient UE. The network node further operative to receive context information related to the unicast recipient UE and/or context information related to the one or more broadcast recipient UE and/or context information related to the one or more multicast recipient UE. In some implementations, the context information includes at least one of UE mobility context information and UE session context information. The network node operative to transport the received unicast data traffic, broadcast data traffic, and/or multicast data traffic on either a unicast subsystem of the communication network or a broadcast/multicast subsystem of the communication network based on the context information.

In an embodiment, a method is provided for handling unicast and broadcast/multicast services in a communications network comprising a network node: receiving from a content provider unicast data, broadcast data, or multicast data intended for at least one UE served by the network server; selecting a unicast radio bearer, a broadcast radio bearer, or a multicast radio bearer based upon the received UE context; coding the received unicast data, broadcast data, or multicast data based on the selected unicast radio bearer, broadcast radio bearer, or multicast radio bearer; and, transmitting the coded data to one or more radio access network nodes (RNs) to forward to the at least one served UE.

In an embodiment, a network node operative to deliver content data over a communications network. The network node comprising: a processor operative to enable the network node to: receive from a content provider unicast data, broadcast data, or multicast data intended for at least one UE served by the network server; select a unicast radio bearer, a broadcast radio bearer, or a multicast radio bearer based upon UE context information; code the received unicast data, broadcast data, or multicast data based on the selected unicast radio bearer, broadcast radio bearer, or multicast radio bearer; and, transmitting the coded data to one or more radio access network nodes (RNs) to forward to the at least one served UE.

In an embodiment, a method is provided for handling unicast, broadcast, and/or multicast services in a communications network comprising a network node: receiving from at least one radio access network node an indication of broadcast data traffic or multicast data traffic intended for at least one UE served by that radio access node; receiving a consumption report indicating consumption demand for that data traffic; determining a radio bearer type for each of the at least one radio access node; and, transmitting to each of the at least one radio access node an instruction indicating the determined radio bearer type for the indicated broadcast/multicast data traffic. In some implementations, the consumption report is received from a network entity on the communications network. In some implementations, the consumption report is received from a broadcast/multicast subsystem. In some implementations, the consumption report is received from a Broadcast/Multicast Service Centre server.

In an embodiment, a User Equipment (UE) is provided, the UE comprising: a processor; a non-transitory memory containing machine executable instructions which, when executed by the processor, render the user equipment operative to: transmit a request for data content; receive a transport protocol response indicating a protocol stack; receive data content on a unicast radio bearer; and, process the received data content based on either a unicast protocol stack or a broadcast/multicast protocol stack based on the received transport protocol response.

In an embodiment, a method is provided for handling unicast, broadcast, and multicast services. The method comprising a User Equipment (UE): transmitting a request for data content; receiving a transport protocol response indicating a protocol stack; receiving data content on a unicast radio bearer; and, processing the received data content based on either a unicast protocol stack or a broadcast/multicast protocol stack based on the received transport protocol response.

Further, it will be readily understood that embodiments of the present invention relate to a communication network system or associated apparatus thereof, which is configured to perform the above-described network functionalities and operations. Again, the system or apparatus may comprise one or more computing, communication and/or memory components of the network infrastructure, which may take various forms, such as specific servers or general-purpose computing, communication and/or memory devices which are configured to provide the required functionality through virtualization technologies. Various methods as disclosed herein may be implemented on one or more real or virtual computing devices, such as devices within a communication network control plane, devices operating in the data plane, or a combination thereof. Computing devices used to implement method operations may include a processor operatively coupled to memory, the memory providing instructions for execution by the processor to perform the method as described herein.

Various embodiments of the present invention utilize real and/or virtual computer resources. Such computer resources utilize, at a hardware level, a set of one or more microprocessors operatively coupled to a corresponding set of memory components which include stored program instructions for execution by the microprocessors. Computing resources may be used to provide virtual computing resources at one or more levels of virtualization. For example, one or more given generic computer hardware platforms may be used to provide one or more virtual computing machines. Computer hardware, such as processor resources, memory, and the like, may also be virtualized in order to provide resources from which further virtual computing machines are built. A set of computing resources which are allocatable for providing various computing resources which in turn are used to realize various computing components of a system, may be regarded as providing a distributed computing system, the internal architecture of which may be configured in various ways.

Through the descriptions of the preceding embodiments, the present invention may be implemented by using hardware only or by using software and a necessary universal hardware platform. Based on such understandings, the technical solution of the present invention may be embodied in the form of a software product. The software product may be stored in a non-volatile or non-transitory storage medium, which can be a compact disk read-only memory (CD-ROM), USB flash disk, or a removable hard disk. The software product includes a number of instructions that enable a computer device (personal computer, server, or network device) to execute the methods provided in the embodiments of the present invention. For example, such an execution may correspond to a simulation of the logical operations as described herein. The software product may additionally or alternatively include number of instructions that enable a computer device to execute operations for configuring or programming a digital logic apparatus in accordance with embodiments of the present invention.

Although the present invention has been described with reference to specific features and embodiments thereof, it is evident that various modifications and combinations can be made thereto without departing from the invention. The specification and drawings are, accordingly, to be regarded simply as an illustration of the invention as defined by the appended claims.

## Claims

1. A method for delivering unicast content data over a communications network comprising:
at a network node:
receiving the unicast content data for transmission to a recipient user equipment (135), UE; wherein the unicast content data is intended for a single UE and is capable of being converted from unicast data traffic using a unicast transport and a unicast protocol stack to a multicast transport using a broadcast/multicast protocol stack for transport through a broadcast/multicast subsystem (404); and,
transmitting the received unicast content data towards at least one radio access network node (130), RN, serving the UE over one of a unicast transport and a multicast transport based on context information;
wherein the context information comprises at least one of:
mobility information associated with the UE;
session information associated with the content data and/or the UE;
radio node context related to at least one operational condition at the RN; and,
network loading conditions;
wherein the network node is further operative to transmit the received unicast content data towards the at least one RN serving the UE by transmitting the received unicast content data to one of a unicast subsystem (402) if the unicast transport is selected, or the broadcast/multicast subsystem (404) if the multicast transport is selected.

2. The method of claim 1, wherein the context information is received from one or more control plane functions.

3. The method of claim 2, wherein the method further comprises the network node:
communicating with the one or more control plane functions through an exposure function.

4. The method of any one of claims 1 to 3, wherein the network node comprises one of:
a packet streaming server;
a node of a broadcast/multicast subsystem;
a Broadcast/Multicast Service Centre server; and,
a third party content provider server outside the communications network.

5. The method of any one of claims 1 to 4, wherein the network node comprises a third party content provider server outside the communications network, and wherein the method further comprises the network node:
receiving the context information from one or more control plane functions accessed through an exposure function.

6. The method of any one of claims 1 to 5, wherein the at least one operational condition comprises at least one of:
a number of UE served by the RN;
a radio channel quality between the RN and the UE;
a radio bearer availability; and,
a type of the content data.

7. A network node operative to deliver unicast content data over a communications network, the network node comprising:
a network interface for receiving data from and transmitting data to nodes connected to the network;
a processor; and
a memory storing instructions that when executed by the processor configure the network node to:
receive the unicast content data for transmission to a recipient user equipment (135), UE; wherein the unicast content data is intended for a single UE and is capable of being converted from unicast data traffic using a unicast transport and a unicast protocol stack to a multicast transport using a broadcast/multicast protocol stack for transport through a broadcast/multicast subsystem (404);
transmit the received unicast content data towards at least one radio access network node (130), RN, serving the UE over one of a unicast transport and a multicast transport based on context information;
wherein the context information comprises at least one of:
mobility information associated with the UE;
session information associated with the content data and/or the UE;
radio node context related to at least one operational condition at the RN; and,
network loading conditions;
wherein the network node is configured to transmit the received unicast content data towards the at least one RN serving the UE by transmitting the received unicast content data to one of a unicast subsystem (402) if the unicast transport is selected, or a broadcast/multicast subsystem (404) if the multicast transport is selected.

8. The network node of claim 7, wherein the at least one operational condition comprises at least one of:
a number of UE served by the RN;
a radio channel quality between the RN and the UE;
a radio bearer availability; and,
a type of the content data.

9. A system, comprising a network node operative to deliver unicast content data over a communication network according to claims 7 or 8, and at least one radio access network node, RN, connected to the communication network and operative to deliver unicast content data to one or more served user equipment, UE, wherein the RN comprises:
a network interface for receiving data from and transmitting data to nodes connected to the network;
a radio interface for receiving data from, and transmitting data to, the one or more served UE;
a processor;
a memory storing instructions that when executed by the processor configure the RN to:
receive the unicast content data;
transmit to at least one recipient UE an instruction based on context information to establish a broadcast radio bearer or a multicast radio bearer to receive the unicast content data;
and,
transmit to the at least one recipient UE the received unicast content data using the established radio bearer.

## Patentansprüche

1. Verfahren zum Bereitstellen von Unicast-Inhaltsdaten über ein Kommunikationsnetz, umfassend:
an einem Netzknoten:
Empfangen der Unicast-Inhaltsdaten zur Übertragung an ein Empfänger-Benutzergerät (135), (user equipment - UE); wobei die Unicast-Inhaltsdaten für ein einzelnes UE bestimmt sind und von Unicast-Datenverkehr unter Verwendung eines Unicast-Transports und eines Unicast-Protokollstapels in einen Multicast-Transport unter Verwendung eines Broadcast-/Multicast-Protokollstapels für Transport durch ein Broadcast-/Multicast-Teilsystem (404) umgewandelt werden können; und
Übertragen der empfangenen Unicast-Inhaltsdaten in Richtung von mindestens einem Funkzugangsnetzknoten (130), (radio node - RN), der das UE über einen von einem Unicast-Transport und einem Multicast-Transport basierend auf Kontextinformationen bedient;
wobei die Kontextinformationen mindestens eines des Folgenden umfassen:
Mobilitätsinformationen, die dem UE zugeordnet sind;
Sitzungsinformationen, die den Inhaltsdaten und/oder dem UE zugeordnet sind;
Funkknotenkontext bezogen auf mindestens eine Betriebsbedingung an dem RN; und
Netzladebedingungen;
wobei der Netzknoten ferner betriebsfähig ist, um die empfangenen Unicast-Inhaltsdaten in Richtung des mindestens einen RN zu übertragen, der das UE bedient, indem die empfangenen Unicast-Inhaltsdaten an eines von einem Unicast-Teilsystem (402), wenn der Unicast-Transport ausgewählt ist, oder dem Broadcast-/Multicast-Teilsystem (404), wenn der Multicast-Transport ausgewählt ist, übertragen werden.

2. Verfahren nach Anspruch 1, wobei die Kontextinformationen von einer oder mehreren Steuerebenenfunktionen empfangen werden.

3. Verfahren nach Anspruch 2, wobei das Verfahren ferner umfasst, dass der Netzknoten:
mit der einen oder den mehreren Steuerebenenfunktionen durch eine Belichtungsfunktion kommuniziert.

4. Verfahren nach einem der Ansprüche 1 bis 3, wobei der Netzknoten eines des Folgenden umfasst:
einen Paket-Streaming-Server;
einen Knoten eines Broadcast-/Multicast-Teilsystems;
einen Broadcast-/Multicast-Service-Center-Server; und
einen Server eines Drittanbieters von Inhalten außerhalb des Kommunikationsnetzes.

5. Verfahren nach einem der Ansprüche 1 bis 4, wobei der Netzknoten einen Server eines Drittanbieters von Inhalten außerhalb des Kommunikationsnetzes umfasst, und wobei das Verfahren ferner umfasst, dass der Netzknoten:
die Kontextinformationen von einer oder mehreren Steuerebenenfunktionen empfängt, auf die durch eine Belichtungsfunktion zugegriffen wird.

6. Verfahren nach einem der Ansprüche 1 bis 5, wobei die mindestens eine Betriebsbedingung mindestens eines des Folgenden umfasst:
eine Anzahl an UE, die durch den RN bedient werden;
eine Funkkanalqualität zwischen dem RN und dem UE;
eine Funkträgerverfügbarkeit; und
einen Typ der Inhaltsdaten.

7. Netzknoten, der betriebsfähig ist, um Unicast-Inhaltsdaten über ein Kommunikationsnetz bereitzustellen, wobei der Netzknoten Folgendes umfasst:
eine Netzschnittstelle zum Empfangen von Daten von und Übertragen von Daten an Knoten, die mit dem Netz verbunden sind;
einen Prozessor; und
einen Speicher, der Anweisungen speichert, die bei Ausführung durch den Prozessor den Netzknoten für Folgendes konfigurieren:
Empfangen der Unicast-Inhaltsdaten zur Übertragung an ein Empfänger-Benutzergerät (135), (user equipment - UE); wobei die Unicast-Inhaltsdaten für ein einzelnes UE bestimmt sind und von Unicast-Datenverkehr unter Verwendung eines Unicast-Transports und eines Unicast-Protokollstapels in einen Multicast-Transport unter Verwendung eines Broadcast-/Multicast-Protokollstapels für Transport durch ein Broadcast-/Multicast-Teilsystem (404) umgewandelt werden können;
Übertragen der empfangenen Unicast-Inhaltsdaten in Richtung von mindestens einem Funkzugangsnetzknoten (130), (radio node - RN), der das UE über einen von einem Unicast-Transport und einem Multicast-Transport basierend auf Kontextinformationen bedient;
wobei die Kontextinformationen mindestens eines des Folgenden umfassen:
Mobilitätsinformationen, die dem UE zugeordnet sind;
Sitzungsinformationen, die den Inhaltsdaten und/oder dem UE zugeordnet sind;
Funkknotenkontext bezogen auf mindestens eine Betriebsbedingung an dem RN; und
Netzladebedingungen;
wobei der Netzknoten konfiguriert ist, um die empfangenen Unicast-Inhaltsdaten in Richtung des mindestens einen RN zu übertragen, der das UE bedient, indem die empfangenen Unicast-Inhaltsdaten an eines von einem Unicast-Teilsystem (402), wenn der Unicast-Transport ausgewählt ist, oder einem Broadcast-/Multicast-Teilsystem (404), wenn der Multicast-Transport ausgewählt ist, übertragen werden.

8. Netzknoten nach Anspruch 7, wobei die mindestens eine Betriebsbedingung mindestens eines des Folgenden umfasst:
eine Anzahl an UE, die durch den RN bedient werden;
eine Funkkanalqualität zwischen dem RN und dem UE;
eine Funkträgerverfügbarkeit; und
einen Typ der Inhaltsdaten.

9. System, umfassend einen Netzknoten, der betriebsfähig ist, um Unicast-Inhaltsdaten über ein Kommunikationsnetz nach Anspruch 7 oder 8 bereitzustellen, und mindestens einen Funkzugangsnetzknoten, (radio node - RN), der mit dem Kommunikationsnetz verbunden und betriebsfähig ist, um Unicast-Inhaltsdaten einem oder mehreren bedienten Benutzergeräten, (user equipment - UE), bereitzustellen, wobei der RN Folgendes umfasst:
eine Netzschnittstelle zum Empfangen von Daten von und Übertragen von Daten an Knoten, die mit dem Netz verbunden sind;
eine Funkschnittstelle zum Empfangen von Daten von und Übertragen von Daten an das eine oder die mehreren bedienten UE;
einen Prozessor;
einen Speicher, der Anweisungen speichert, die bei Ausführung durch den Prozessor den RN für Folgendes konfigurieren:
Empfangen der Unicast-Inhaltsdaten;
Übertragen einer Anweisung basierend auf Kontextinformationen an mindestens ein Empfänger-UE, um einen Broadcast-Funkträger oder einen Multicast-Funkträger einzurichten, um die Unicast-Inhaltsdaten zu empfangen;
und
Übertragen der empfangenen Unicast-Inhaltsdaten an das mindestens eine Empfänger-UE unter Verwendung des eingerichteten Funkträgers.

## Revendications

1. Procédé de fourniture de données de contenu de monodiffusion sur un réseau de communication comprenant :
à un nœud de réseau :
la réception des données de contenu de monodiffusion pour transmission à un équipement utilisateur destinataire (135), UE ; dans lequel les données de contenu de monodiffusion sont destinées à un seul UE et peuvent être converties d'un trafic de données de monodiffusion à l'aide d'un transport de monodiffusion et d'une pile de protocoles de monodiffusion en un transport de multidiffusion à l'aide d'une pile de protocoles de diffusion/multidiffusion pour le transport par l'intermédiaire d'un sous-système de diffusion/multidiffusion (404) ; et,
la transmission des données de contenu de monodiffusion reçues vers au moins un nœud de réseau d'accès radio (130), RN, desservant l'UE sur l'un d'un transport de monodiffusion et d'un transport de multidiffusion sur la base d'informations de contexte ;
dans lequel les informations de contexte comprennent au moins l'un :
d'informations de mobilité associées à l'UE ;
d'informations de session associées aux données de contenu et/ou à l'UE ;
d'un contexte de nœud radio lié à au moins une condition opérationnelle au niveau du RN ; et,
de conditions de chargement de réseau ;
dans lequel le nœud de réseau peut en outre fonctionner de manière à transmettre les données de contenu de monodiffusion reçues vers l'au moins un RN desservant l'UE en transmettant les données de contenu de monodiffusion reçues à l'un d'un sous-système de monodiffusion (402) si le transport de monodiffusion est sélectionné, ou du sous-système de diffusion/multidiffusion (404) si le transport multidiffusion est sélectionné.

2. Procédé selon la revendication 1, dans lequel les informations de contexte sont reçues en provenance d'une ou de plusieurs fonctions du plan de commande.

3. Procédé selon la revendication 2, dans lequel le procédé comprend en outre :
la communication du nœud de réseau avec la ou les fonctions du plan de commande par l'intermédiaire d'une fonction d'exposition.

4. Procédé selon l'une quelconque des revendications 1 à 3, dans lequel le nœud de réseau comprend l'un :
d'un serveur de diffusion de paquets ;
d'un nœud d'un sous-système de diffusion/multidiffusion ;
d'un serveur de centre de services de diffusion/multidiffusion ; et,
d'un serveur de fournisseur de contenu tiers en dehors du réseau de communication.

5. Procédé selon l'une quelconque des revendications 1 à 4, dans lequel le nœud de réseau comprend un serveur fournisseur de contenu tiers à l'extérieur du réseau de communication, et dans lequel le procédé comprend en outre :
la réception par le nœud de réseau des informations de contexte d'une ou plusieurs fonctions du plan de commande auxquelles on accède par l'intermédiaire d'une fonction d'exposition.

6. Procédé selon l'une quelconque des revendications 1 à 5, dans lequel l'au moins une condition opérationnelle comprend au moins l'un :
d'un nombre d'UE desservis par le RN ;
d'une qualité de canal radio entre le RN et l'UE ;
d'une disponibilité de support radio ; et,
d'un type des données de contenu.

7. Nœud de réseau opérationnel pour fournir des données de contenu de monodiffusion sur un réseau de communication, le nœud de réseau comprenant :
une interface réseau pour recevoir des données et transmettre des données aux nœuds connectés au réseau ;
un processeur ; et
une mémoire stockant des instructions qui, lorsqu'elles sont exécutées par le processeur, configurent le nœud de réseau pour :
recevoir les données de contenu de monodiffusion pour transmission à un équipement utilisateur destinataire (135), UE ; dans lequel les données de contenu de monodiffusion sont destinées à un seul UE et peuvent être converties d'un trafic de données de monodiffusion à l'aide d'un transport de monodiffusion et d'une pile de protocoles de monodiffusion en un transport de multidiffusion à l'aide d'une pile de protocoles de diffusion/multidiffusion pour le transport par l'intermédiaire d'un sous-système de diffusion/multidiffusion (404) ;
transmettre les données de contenu de monodiffusion reçues vers au moins un nœud de réseau d'accès radio (130), RN, desservant l'UE sur l'un d'un transport de monodiffusion et d'un transport de multidiffusion sur la base d'informations de contexte ;
dans lequel les informations de contexte comprennent au moins l'un :
d'informations de mobilité associées à l'UE ;
d'informations de session associées aux données de contenu et/ou à l'UE ;
d'un contexte de nœud radio lié à au moins une condition opérationnelle au niveau du RN ; et,
de conditions de chargement de réseau ;
dans lequel le nœud de réseau est conçu pour transmettre les données de contenu de monodiffusion reçues vers l'au moins un RN desservant l'UE en transmettant les données de contenu de monodiffusion reçues à l'un d'un sous-système de monodiffusion (402) si le transport de monodiffusion est sélectionné, ou d'un sous-système de diffusion/multidiffusion (404) si le transport multidiffusion est sélectionné.

8. Nœud de réseau selon la revendication 7, dans lequel l'au moins une condition opérationnelle comprend au moins l'un :
d'un nombre d'UE desservis par le RN ;
d'une qualité de canal radio entre le RN et l'UE ;
d'une disponibilité de support radio ; et,
d'un type des données de contenu.

9. Système, comprenant un nœud de réseau pouvant fonctionner de manière à fournir des données de contenu de monodiffusion sur un réseau de communication selon les revendications 7 ou 8, et au moins un nœud de réseau d'accès radio, RN, connecté au réseau de communication et pouvant fonctionner de manière à fournir des données de contenu de monodiffusion à un ou plusieurs équipements utilisateur desservis, UE, dans lequel le RN comprend :
une interface réseau pour recevoir des données et transmettre des données aux nœuds connectés au réseau ;
une interface radio pour recevoir des données depuis, et transmettre des données vers, le ou les UE desservis ;
un processeur ;
une mémoire stockant des instructions qui, lorsqu'elles sont exécutées par le processeur, configurent le RN pour :
recevoir les données de contenu de monodiffusion ;
transmettre à au moins un UE destinataire une instruction basée sur des informations de contexte pour établir un support radio de diffusion ou un support radio de multidiffusion pour recevoir les données de contenu de monodiffusion ;
et,
transmettre à l'au moins un UE destinataire les données de contenu de monodiffusion reçues en utilisant le support radio établi.
